# EUROPÄISCHE PATENTSCHRIFT

(11) **EP 1 280 071 B1**
(45) Veröffentlichungstag und Bekanntmachung des Hinweises auf die Patenterteilung: **27.09.2006**
(21) Anmeldenummer: 01890218.9
(22) Anmeldetag: 26.07.2001
(51) Int. Cl.: G06F 17/30

(54) **Verfahren zur Erzeugung eines tabellengesteuerten Dialoges mit Mehrfach-Navigation für relational-multimediale Informationssysteme**
Method of creating a table controlled dialog comprising a multi path navigation for relational multimedia applications
Procédé de création d'un dialogue commandé par table et un procédé de navigation multiple pour des systèmes d'information relationelle et multimédia

(43) Veröffentlichungstag der Anmeldung: 29.01.2003
(73) Patentinhaber: Weber, Gerold, 1190 Wien (AT); Schneider, Gerda, 1130 Wien (AT)
(72) Erfinder: Weber, Gerold, 1190 Wien (AT); Schneider, Gerda, 1130 Wien (AT)

## Beschreibung

### Ausgangssituation

Die vorliegende Erfindung ist einerseits dem Feld der metadatengesteuerten Erzeugung einer Benutzeroberfläche für Software-Anwendungen zuzuordnen, deren Anwendungsdaten in relationalen Datenbanken abgelegt sind. Weiters ist ein integraler Bestandteil der hier dargelegten Erfindung die neue Multihyperlink-Navigation, mit der dem Benutzer ein maximaler Vernetzungsgrad des Navigations-Dialoges bereitgestellt werden kann.

Die Entwicklung von benutzerfreundlichen Datenbank-Anwendungen mit anspruchsvoller Navigation für das Internet oder unternehmensinterne Netze erfordert häufig ausgedehnte Programmierkenntnisse. Die Programme werden mit Hochsprachen (Java, C, Visual Basic, Cobol,...) oder mit Scripting-Sprachen (VBScript, Perl, etc.), im allgemeinen unter Einbeziehung diverser Browser-Technologien (HTML, JavaScript, XML, CSS, etc.), programmiert. Dies erfordert für Entwicklung und Instandhaltung hohe Skills und Aufwände. Technologien hingegen, bei denen für die Erstellung von Datenbank-Anwendungen keine Programmierung erforderlich ist, erlauben meist nur die Erstellung einfacher Anzeige- und Eingabeformulare ohne Navigation. Einige Technologien, deren Schwerpunkt eher auf Suchfunktionen oder Navigation liegt, verwenden ein anderes Verfahren als das hier dargelegte, wodurch deren Navigationsparadigma andere Eigenschaften als das hier dargelegte aufweist. Es ist also ersichtlich, dass es einerseits Bedarf an Verfahren für die schnelle und einfache Erstellung von relationalen Software-Anwendungen gibt, andererseits aber neue Navigationsparadigmen mit speziellen Eigenschaften möglich sind.

### Stand der Technik

Die Patentanmeldung US 5630125 beschreibt beispielsweise ein System und ein Verfahren zur Informationsverwaltung, das eine offene hierarchische Struktur besitzt und einen menü-artigen Zugriff auf Daten erlaubt. Eine Darstellung oder Verwaltung des maximalen Vernetzungsgrades einer Anwendung, d.h. die Darstellung aller möglichen oder vorbestimmten semantischen Pfade zu oder von einem Navigationsknoten ist aber nicht vorgesehen. Dadurch werden stets nur Teile des möglichen gesamten Vernetzungsgrades der Anwendungsdaten sowohl dem Programmierer als auch dem Benutzer zur Verfügung gestellt.

Es handelt sich bei dem Endprodukt des in US 5630125 beschriebenen Systems bzw. Verfahrens im Gegensatz zur vorliegenden Erfindung um ein Einzelplatzsystem ("standalone information system"), das nach Fertigstellung nicht mehr ohne größeren Aufwand geändert werden kann, daher ist auch die Benutzung von XML-Dokumenten zum Datenaustausch und zur Anwendungssteuerung in Dokument US 5630125 nicht vorgesehen.

Dokument US 5742768 beschreibt ein Verfahren zur Erzeugung eines einfachen, vordefinierten Menüeintrags in einem Internet-Dokument. Eine dynamische Anpassung des Menüs sowie eine Unterstützung des Autors bei der Erstellung der Menüstruktur mit Hinblick auf eine Vollständigkeit der Vernetzung fehlt.

### Kurzfassung der Erfindung

Mit der gegenständlichen Erfindung können ohne anwendungsspezifische Programmierung spezielle relational-multimediale Datenbank-Anwendungen entwickelt werden, die aufgrund der charakteristischen Mehrfach-Navigation (Multihyperlink-Navigation, MHL-Navigation) im folgenden als Multihyperlink-Anwendungen (MHL-Anwendungen) bezeichnet werden. MHL-Anwendungen enthalten hauptsächlich relationale Anwendungsdaten zu einem bestimmten Themenbereich. Ergänzend enthalten sie auch in Files (Textfiles, Bildfiles, Videofiles, etc.) abgelegte Daten. Die Anwendungsdaten können in einem speziellen Dialog angezeigt, navigiert, gesucht, eingefügt, geändert und gelöscht werden. Der Dialog besteht aus dem Inhaltsverzeichnis, der Anzeige von Multihyperlink-Formularen (MHL-Formularen), der MHL-Navigation, der Suche, der Datenänderung und der Personalisierung.

Das Inhaltsverzeichnis zeigt an, welche MHL-Formulare der Benutzer zunächst ansehen darf. In MHL-Formularen werden die Anwendungsdaten angezeigt, wobei bestimmte Anwendungsdaten (z.B. Namen) als Multihyperlinks (MHLs) speziell gekennzeichnet sein können (z.B. in einer bestimmten Farbe unterstrichen, jedoch unterschiedlich zu "gewöhnlichen" Hyperlinks). In einer Ausprägung der MHL-Navigation klickt der Benutzer mit der rechten Maustaste auf einen Multihyperlink (MHL) und bekommt eine für diesen Ausgangs-MHL spezifische Liste der Semantischen Pfade (MFIL-Pathlist) angezeigt. Nach Auswahl eines Semantischen Pfades (MHL-Path) erhält der Benutzer ein neues MHL-Formular mit Anwendungsdaten, die genau zum Ausgangs-MHL passen. In der Suche können Kriterien für die im MHL-Formular anzuzeigenden Anwendungsdaten formuliert werden. Die Datenänderung ermöglicht das Einfügen, Ändern und Löschen relationaler Anwendungsdaten, wobei die vom Benutzer eingegeben Daten auf verschiedene Art validiert werden können. Mit der Personalisierung können MHL-Pathlist und Inhaltsverzeichnis an die Wünsche des Benutzers angepasst werden. Die für das Verfahren erforderlichen Metadaten über die MHL-Anwendung (Semantisches Modell, Persistenzmodell, Transportmodell, Dialogmodell) sind in einer Metadatenbank gespeichert.

In der technischen Realisierung werden die von der allgemeinen Dialog-Client-Software angeforderten spezifischen Anwendungs- und Metadaten von der allgemeinen Dialog-Server-Software bereitgestellt, sodass vom Dialog-Client die gewünschte Funktion (z.B. Anzeige eines MHL-Formulares) durchgeführt werden kann. Nach erfolgter Benutzerinteraktion (z.B. Auswahl eines Semantischen Pfades zu einem MHL) wird vom Dialog-Client eine den Benutzeranforderungen entsprechende Nachricht zusammengestellt und an den Dialog-Server gesendet. Dieser ermittelt aufgrund der Metadaten die für den nächsten Dialogschritt erforderlichen Informationen und überträgt sie an den Dialog-Client.

### Allgemeine Beschreibung des Apparatus

Im folgenden wird die bevorzugte Realisierungsvariante beschrieben, bei welcher das gegenständliche Verfahren durch einen Benutzer im Zusammenspiel mit verschiedenen im Internet verteilten Rechnern und Software-Komponenten hervorgebracht wird.

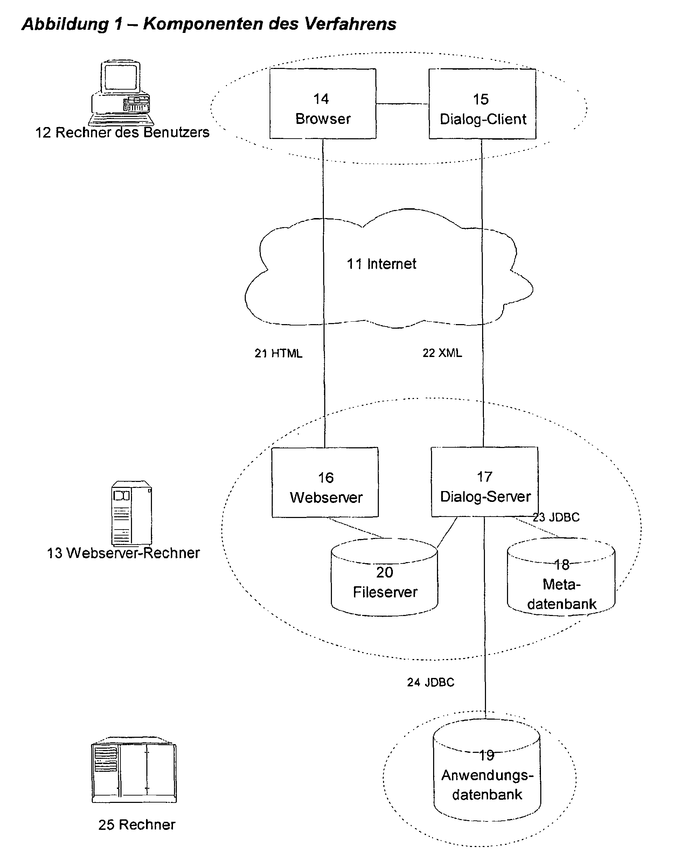

Für die Anwendung im Internet bzw. Intranet werden folgende Minimal-Voraussetzungen für den Apparatus, mit dem die Gesamt-Funktionalität erzielt werden kann, als gegeben angenommen (Abb. 1):
- Das 11 Internet mit den 21 üblichen Protokollen und Standards (TCP/IP, HTTP, HTML, etc.) für die Kommunikation zwischen 12 Benutzer-Rechnern (PCs, etc.) und 13 Webserver-Rechnern.
- Ein 12 Benutzer-PC, auf dem die übliche 14 Standardsoftware (Browser) zur Kommunikation mit 13 Webserver-Rechnern installiert hat und der mit dem 11 Internet verbunden ist.
- Eine 16 Webserver-Software, die auf Requests des Benutzers reagiert. Die Webserver-Software ist auf dem 13 Webserver-Rechner installiert.
- Ein 20 Fileserver für die Bereitstellung von anwendungsspezifischen Files (HTML-Files, Bild-Files, Sound-Files, Video-Files, etc.). Der Fileserver befindet sich üblicherweise auf dem 13 Webserver-Rechner.
- Eine 19 relationale Anwendungsdatenbank für die Bereitstellung von Anwendungsdaten über 24 JDBC. Die Anwendungsdatenbank kann sich auf einem anderen Rechner als dem 13 Webserver-Rechner befinden.

Die gegenständliche Erfindung führt folgende zusätzlichen Elemente ein (Abb. 1):
- Eine 18 relationale Metadatenbank für die Bereitstellung von Anwendungsmetadaten über 23 JDBC. Die Metadatenbank befindet sich üblicherweise auf dem 13 Webserver-Rechner.
- Eine 15 Dialog-Client-Software, die aufgrund der Benutzeraktionen Requests an den 17 Dialog-Server stellt und mittels der als Response empfangenen Anwendungs- und Metadaten die gewünschte Benutzeroberfläche und Funktionalität realisiert. Der Dialog-Client ist ein Java-Applet und befindet sich zur Laufzeit auf dem 12 Benutzer-PC.
- Eine 17 multiuserfähige Dialog-Server-Software, die von 15 Dialog-Clients stammende Requests entgegennimmt und mittels Metadaten verarbeitet. Als Response werden dem anfordernden 15 Dialog-Client Anwendungs- und Metadaten übermittelt. Der Dialog-Server ist mit Java-Technologie realisiert und befindet sich üblicherweise auf dem 13 Webserver-Rechner.
- Ein 22 XML-Protokoll für die Übermittlung von Requests des 15 Dialog-Client an den 17 Dialog-Server sowie für die Übermittlung von Responses vom 17 Dialog-Server an den 15 Dialog-Client.

### Anmerkung:

Andere Netze und Übertragungs-Protokolle, andere Endgeräte (z.B. Network Computer mit kleinerem Display, Personal Digital Assistent, Handy), andere Dialog-Client-Technologien (z.B. Realisierung als im Browser ausgeführtes HTML mit eingebetteten Javascript-Befehlen), andere Metamodell-Technologien (z.B. objektorientierte Speicherung der Metadaten), andere Dialog-Server-Technologien (z.B. Realisierung in anderer Programmiersprache) stellen ebenfalls gültige Äquivalente dar. Auch die Standalone-Realisierung, bei welcher sich alle für das Verfahren benötigten Daten und Software-Komponenten auf einem einzigen Rechner befinden und daher kein Netz für die Übertragung der Messages benötigt wird, stellt bei sonst gleicher Architektur ein Äquivalent dar.

Der Prototyp für die gegenständliche Erfindung ist eine Standalone-Realisierung auf einem mit dem Betriebssystem Windows NT 4.0 ® (registrierte Schutzmarke) ausgestatteten Personal-Computer. Als Programmiersprache und Datenbank wurde Visual Foxpro 6.0 ® (registrierte Schutzmarke) eingesetzt.

Typische Verfahrensschritte sind u.a. (Details und weitere Schritte siehe Beispiel): Anzeige des Inhaltsverzeichnisses für eine MHL-Anwendung, Anzeige eines MHL-Formulares, Navigation über Semantische Pfade.

### Anzeige des Inhaltsverzeichnisses:

Der Benutzer erreicht von seinem 12 Rechner mittels des Browser über das 11 Internet und einen 13 Webserver eine Seite, auf welcher der Benutzer eine MHL-Anwendung starten kann. Der vom Browser gestartete 15 Dialog-Client verlangt über das 22 XML-Protokoll vom 17 Dialog-Server die Daten für das Inhaltsverzeichnis der MHL-Anwendung. Der 17 Dialog-Server ermittelt mittels 23 JDBC aus der 18 Metadatenbank die erforderlichen Daten und sendet sie mittels des 22 XML-Protokolles an den 15 Dialog-Client, der daraufhin das Inhaltsverzeichnis für den Benutzer anzeigt. Anzeige eines MHL-Formulares:

Der Benutzer wählt mittels des Inhaltsverzeichnisses jenes MHL-Formular aus, das er sehen möchte. Der 15 Dialog-Client verlangt über das 22 XML-Protokoll vom 17 Dialog-Server die Daten für das ausgewählte MHL-Formular. Der 17 Dialog-Server ermittelt mittels 23 JDBC aus der 18 Metadatenbank sowie mittels 24 JDBC aus der Anwendungsdatenbank die vom 15 Dialog-Client benötigten Anwendungs- und Metadaten und sendet sie über das 22 XML-Protokoll an den 15 Dialog-Client. Dieser zeigt daraufhin das MHL-Formular an.

### Navigation über Semantische Pfade:

Der Benutzer führt auf einem im MHL-Formular angezeigten MHL einen rechten Mausklick durch, wonach ihm der 15 Dialog-Client die zum geklickten MHL sinnvolle Menge der Semantischen Pfade unmittelbar anzeigt. Der Benutzer wählt einen Pfad aus. Der 15 Dialog-Client verlangt über das 22 XML-Protokoll vom 17 Dialog-Server die Daten für das nächste MHL-Formular. Der 17 Dialog-Server ermittelt mittels 23 JDBC aus der 18 Metadatenbank sowie unter Berücksichtigung des angeklickten MHL mittels 24 JDBC aus der Anwendungsdatenbank die vom 15 Dialog-Client benötigten Anwendungs- und Metadaten und sendet sie über das 22 XML-Protokoll an den 15 Dialog-Client. Dieser zeigt daraufhin das MHL-Formular mit den zum geklickten MHL in Kontext stehenden Daten an.

### Wiederholung des Verfahrens:

Die MHL-Navigation kann, ausgehend von einem im neuen MHL-Formular enthaltenen MHL, in derselben Weise fortgesetzt werden.

### Beschreibung der Erfindung anhand eines Beispiels

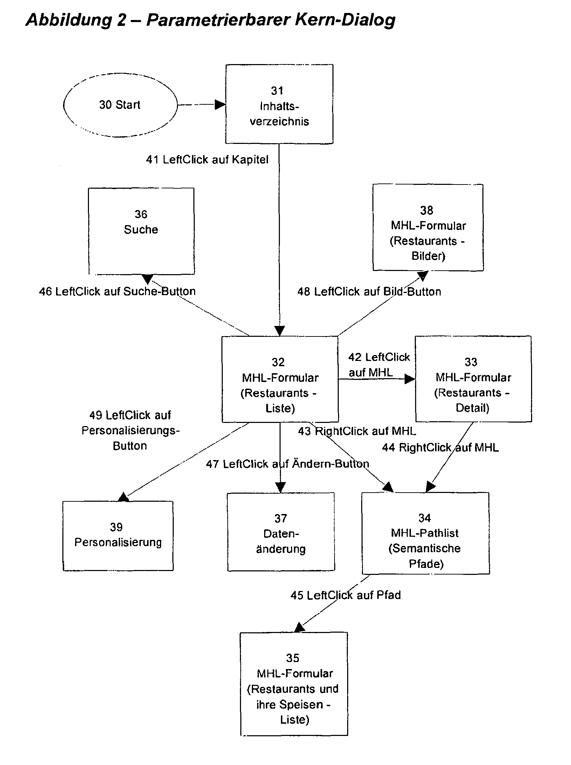

Zunächst wird ein parametrierbarer Kern-Dialog (Abb. 2) für MHL-Anwendungen vorgestellt. In vielen Fällen ist es nicht erforderlich, diese Kern-Funktionen um anwendungsspezifische und individuell programmierte Funktionen zu ergänzen. Als beispielhafte MHL-Anwendung wird die Anwendung "Restaurantführer Österreich" gewählt, die u.a. Informationen über Orte, Restaurants, Speisen und Aktionswochen enthält. Die anschliessende technische Beschreibung erläutert charakteristische Verfahrensschritte, durch welche der Kern-Dialog in Interaktion mit dem Benutzer erzeugt werden kann. Das beschriebene Verfahren läßt sich auch auf andere Arten von Kern-Dialogen für MHL-Anwendungen (z.B. für andere Endgeräte wie Handies, PDAs) anwenden.

### Kern-Dialog

Der Kern-Dialog umfasst folgende Kern-Funktionen:

### 1. Anzeige des Inhaltsverzeichnisses

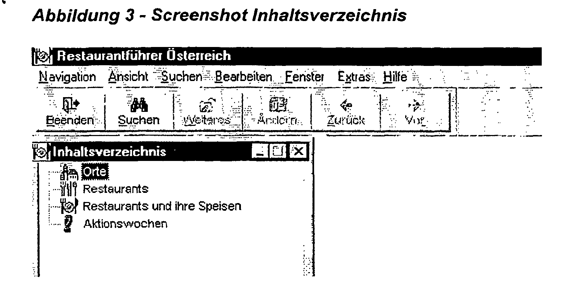

Der Browser startet zunächst den Dialog-Client. Dieser zeigt als erstes das Inhaltsverzeichnis der MHL-Anwendung an (Abb. 2/31, Screenshot Abb. 3). Das Inhaltsverzeichnis gibt einen Überblick über die auswählbaren Kapitel und wird üblicherweise auch während der folgenden Info-Dialogschritte angezeigt.

### 2. Anzeige eines MHL-Formulares

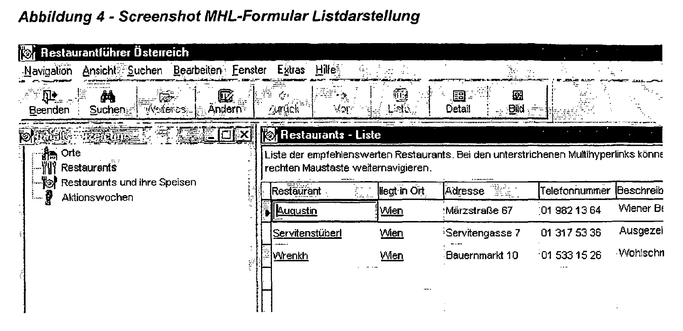

Der Benutzer führt auf einem Kapitel des Inhaltsverzeichnisses ("Restaurants") einen linken Mausklick durch (Abb. 2/41). Anschliessend wird ein MHL-Formular angezeigt ("Restaurants - Liste", Abb. 2/32, Screenshot Abb. 4). Das MHL-Formular enthält als Multihyperlinks gekennzeichnete Anwendungsdaten (Abb. 4, unterstrichen angezeigte Daten in den Spalten 'Restaurant' und 'liegt in Ort').

### 3. MHL-Navigation

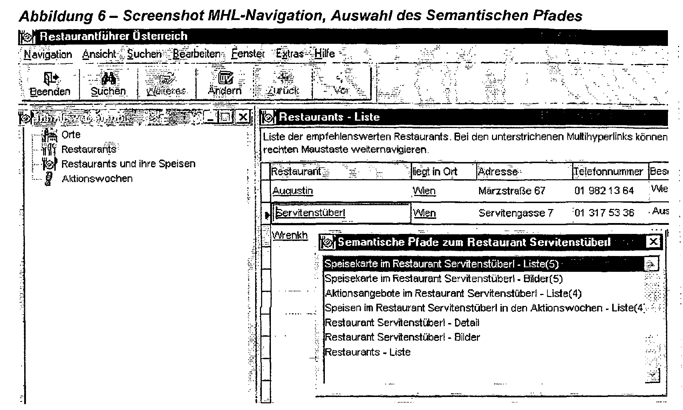

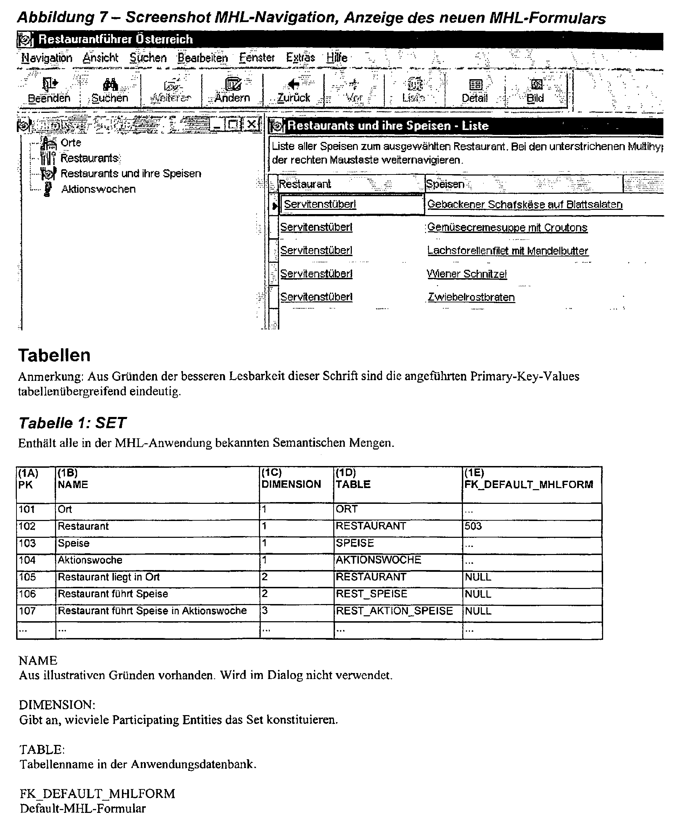

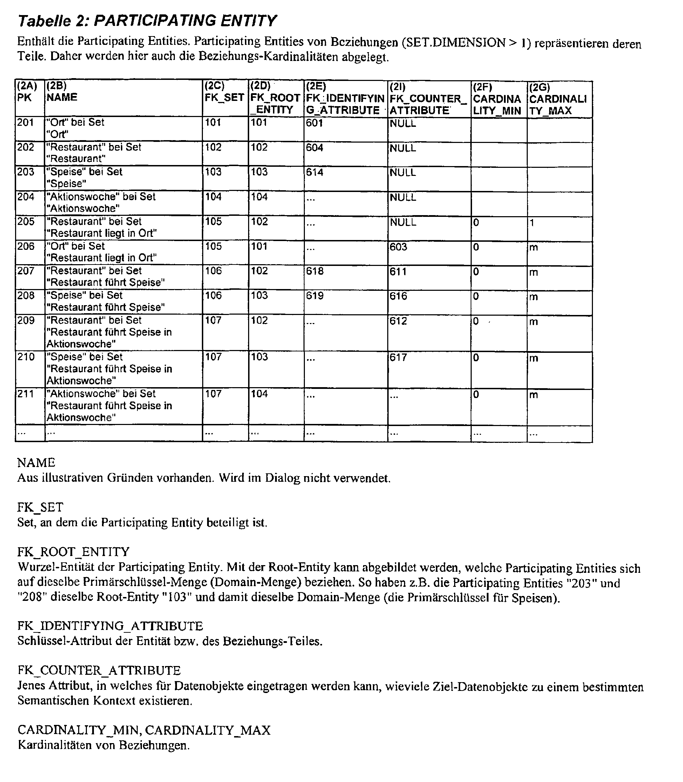

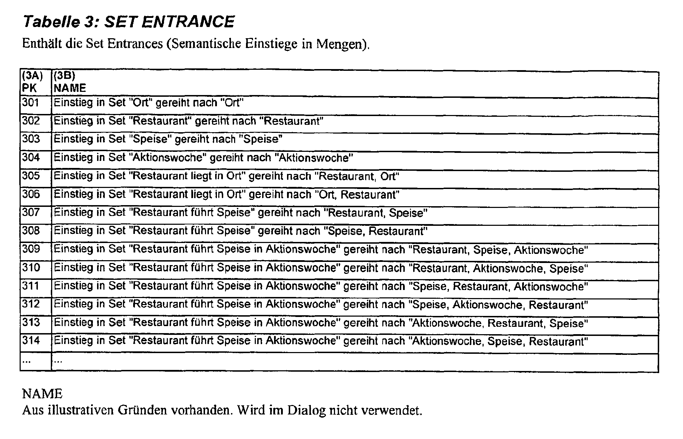

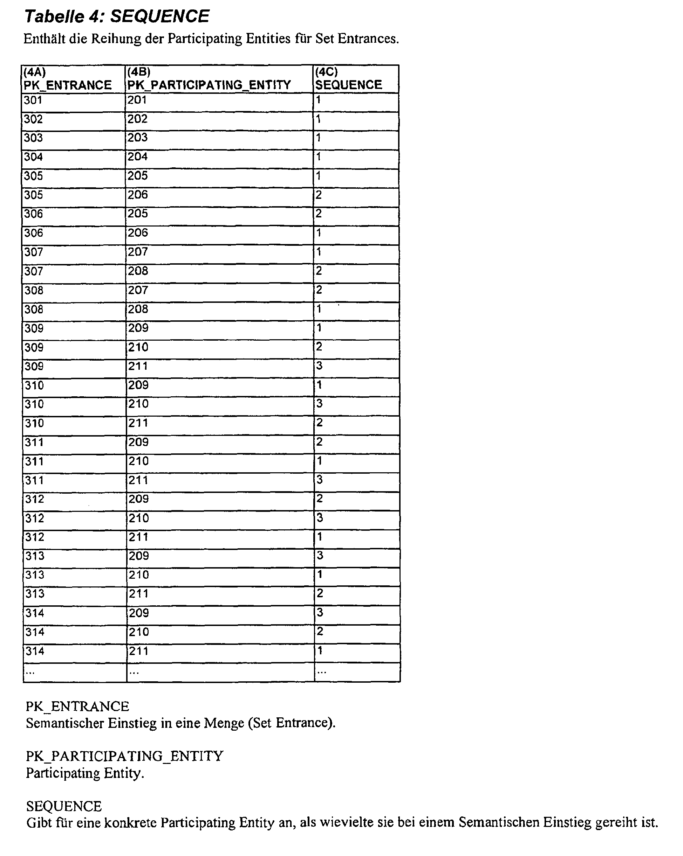

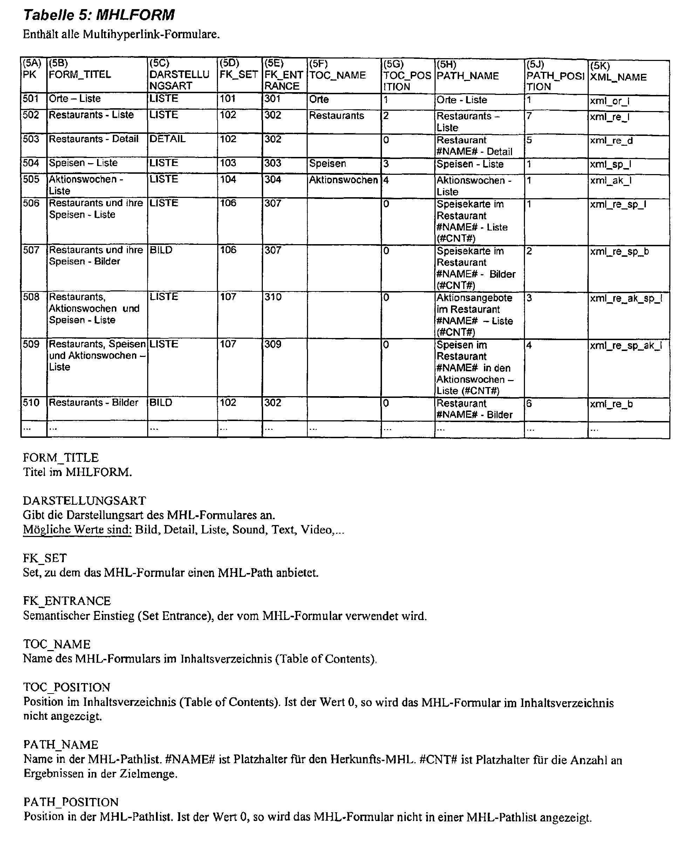

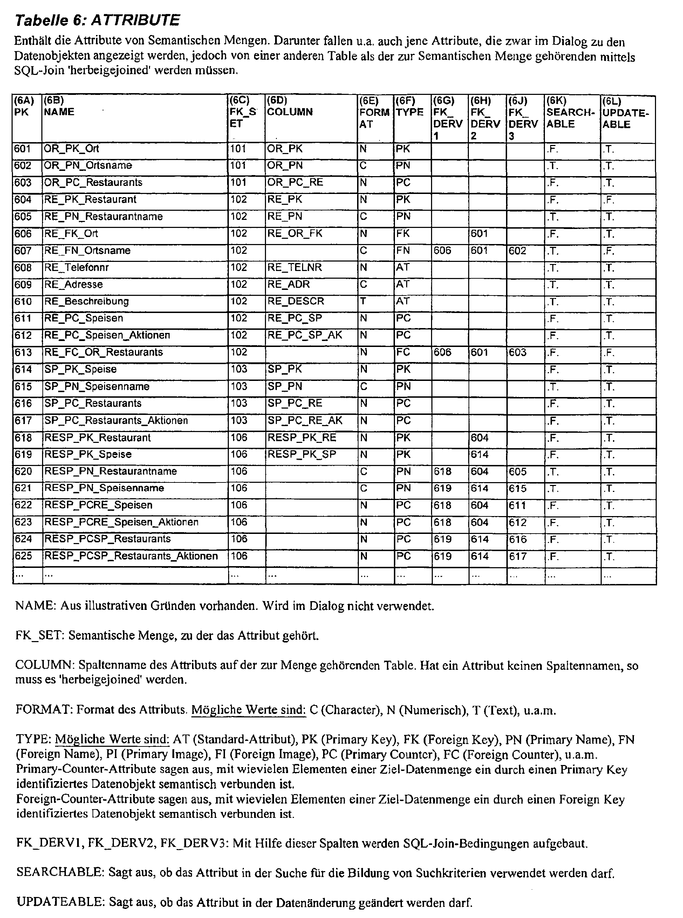

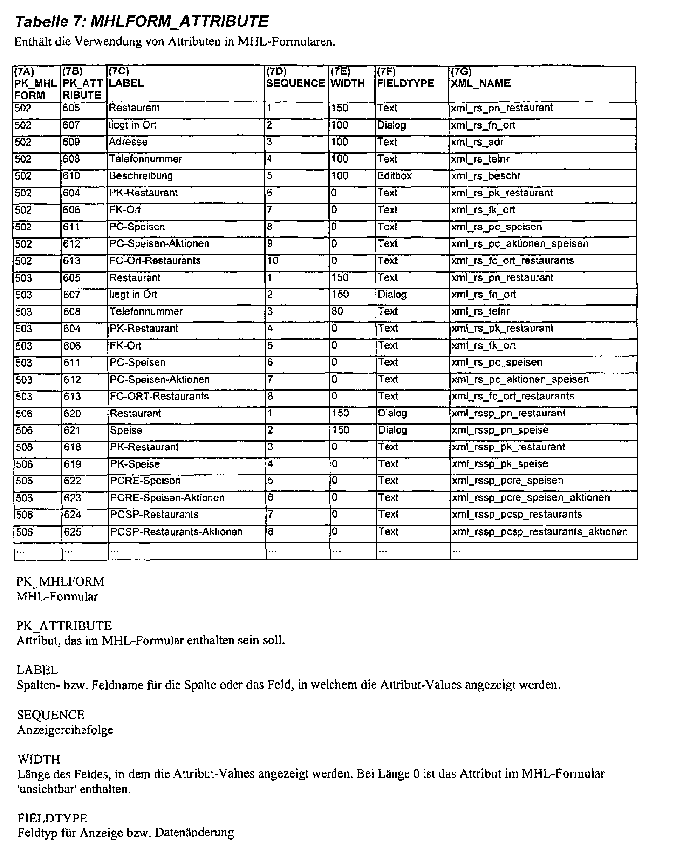

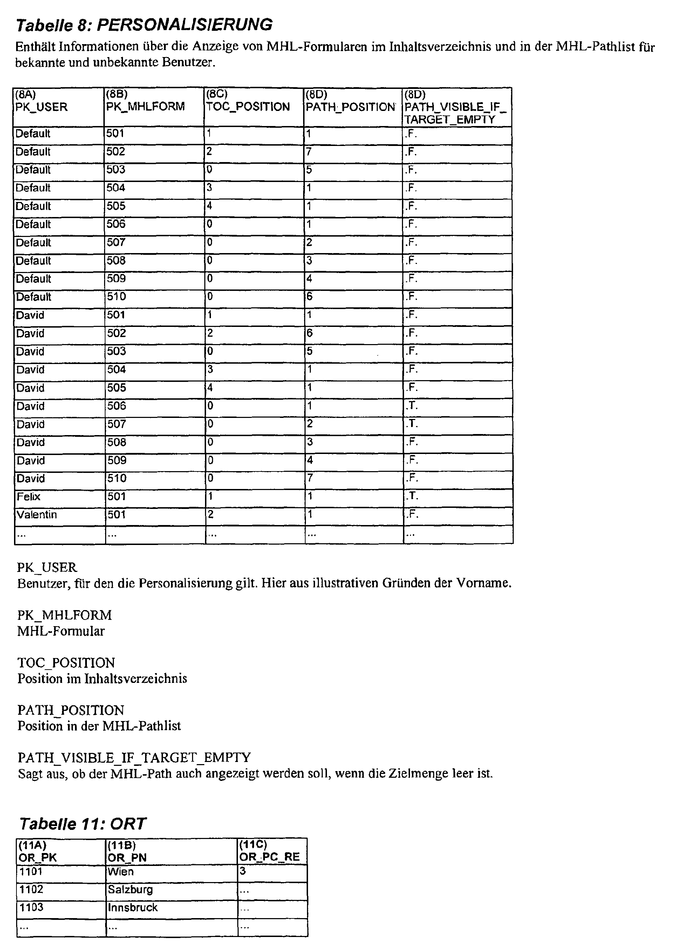

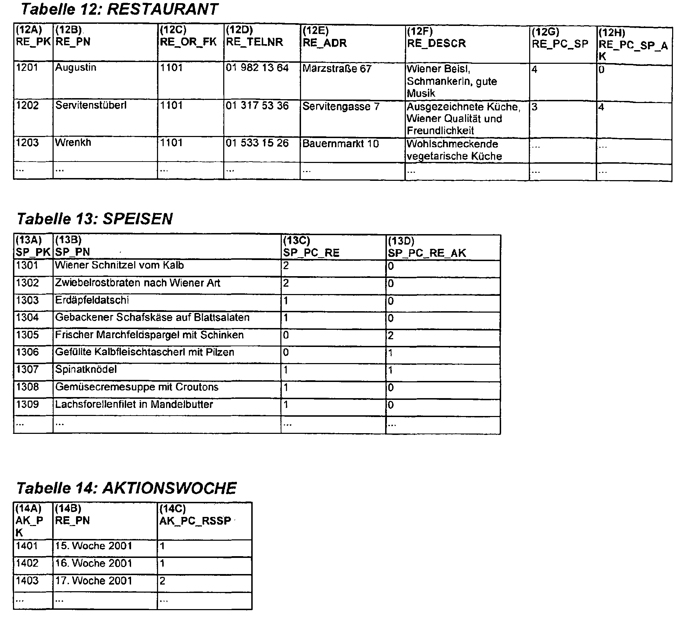

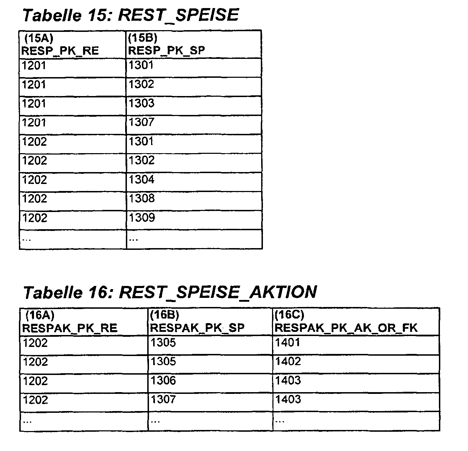

Der Benutzer führt in einem MHL-Formular ("Restaurants - Liste", Abb. 2/32, Screenshot Abb. 4) auf einem MHL ("Servitenstüberl") einen rechten Mausklick durch (Abb. 2/43). Anschliessend wird die MHL-Pathlist angezeigt (Abb. 2/34, Screenshot Abb. 6). Danach führt der Benutzer einen linken Mausklick auf einem Semantischen Pfad durch ("Speisekarte im Restaurant Servitenstüberl, Liste(5)", Abb. 2/45). In der Folge wird das angeforderte MHL-Formular angezeigt ("Restaurants und ihre Speisen - Liste", Abb. 2/35, Screenshot Abb. 7). Es werden die zum Ausgangs-Datenobjekt ("Servitenstüberl") in Kontext stehenden Ziel-Datenobjekte angezeigt (die im Servitenstüberl angebotenen Speisen, aufsteigend sortiert nach Restaurantname und Speisenname, beginnend bei der alphabetisch ersten Speise des Servitenstüberls). Die MHL-Navigation kann mit demselben Verfahren fortgesetzt werden. Siehe auch Erläuterungen: **→** MHL-Navigation, Multihyperlink, Semantischer Pfad, Ziel-MHL-Formular.

### 4. Sonstige Funktionen

### Anzeige des Default-MHL-Formulares zu einem MHL

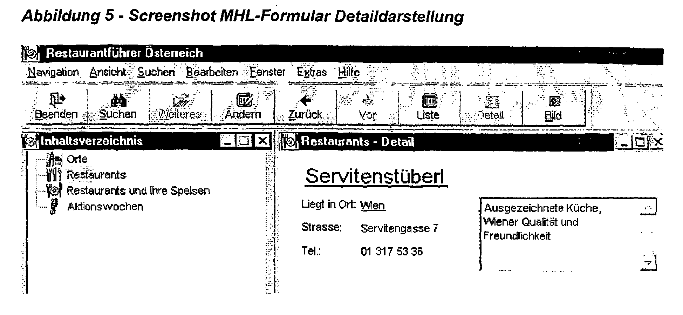

Der Benutzer führt in einem MHL-Formular ("Restaurants - Liste", Abb. 2/32, Screenshot Abb. 4) auf einem MHL ("Servitenstüberl") einen linken Mausklick durch (Abb. 2/42). Danach wird das Default-MHL-Formular für das ausgewählte Restaurant angezeigt ("Restaurants - Detail", Abb. 2/33, Screenshot Abb. 5).

### Anzeige eines verwandten MHL-Formulares

Der Benutzer führt in einem MHL-Formular ("Restaurants - Liste", Abb. 2/32, Screenshot Abb. 4) auf einem der zu verwandten MHL-Formularen führenden Buttons ("Bild") einen linken Mausklick durch (Abb. 2/48). Danach wird das verwandte MHL-Formular angezeigt ("Restaurants - Bilder", Abb. 2/38).

### Suche

Der Benutzer führt in einem MHL-Formular (Abb. 2/32) auf dem Button "Suchen" einen linken Mausklick (Abb. 2/46) durch. Danach wird das Suchformular zu einem MHL-Formular angezeigt (Abb. 2/36). In diesem können Filterkriterien für die im MHL-Formular anzuzeigenden Daten angegeben werden.

### Datenänderung

Der Benutzer führt in einem MHL-Formular (Abb. 2/32) einen linken Mausklick auf dem Button "Ändern" durch (Abb. 2/47). Danach wird das Datenänderungsformular zu einem MHL-Formular angezeigt (Abb. 2/37). Anwendungsdaten können nun eingefügt, geändert oder gelöscht werden. Dabei werden in der Anwendungsdatenbank auch spezielle Counter-Spalten aktualisiert, aus denen hervorgeht, ob die in der MHL-Navigation potenziell anzeigbaren Semantischen Pfade zu mindestens einem Ziel-Datenobjekt führen.

### Personalisierung

Der Benutzer führt in der MHL-Pathlist (Abb. 2/34) einen linken Mausklick auf dem Button "Personalisieren" durch (Abb. 2/49). Danach wird das Personalisierungs-Formular zur MHL-Pathlist angezeigt (Abb. 2/39). In diesem kann der Benutzer seine MHL-Pathlist personalisieren.

### Technische Beschreibung

Die folgende technische Beschreibung stellt, wie schon oben erwähnt, nur die bevorzugte Verkörperung des Verfahrens dar. Insbesondere ist auch die Wahl der XML-Notation nicht zwingend erforderlich, sondern dient, wie auch einige andere Elemente der Beschreibung, hauptsächlich der einfacheren Lesbarkeit dieser Schrift.

### Starten einer MHL-Anwendung - Anzeige des Inhaltsverzeichnisses

### Benutzeraktion, Initialisierung des Dialog-Client

Der Benutzer klickt im Browser auf einer Webseite auf den Hyperlink "Restaurantführer Österreich".

Der Browser erzeugt einen Request zu einer frei wählbaren Webadresse und sendet dabei Parameter wie folgt:
http://www.anyurl.at/start?request=start&mhlapplication=RestaurantführerÖsterreich

### Dialog-Client: Initialisierung, Request an den Dialog-Server

Mittels eines HTML-Formulares wird das Applet'dialogclient' (im folgenden Synonym mit Dialog-Client) initialisiert.

Das Applet verlangt mittels eines XML-Dokumentes vom Dialog-Server die Daten für das Inhaltsverzeichnis der Anwendung "Restaurantführer Österreich".

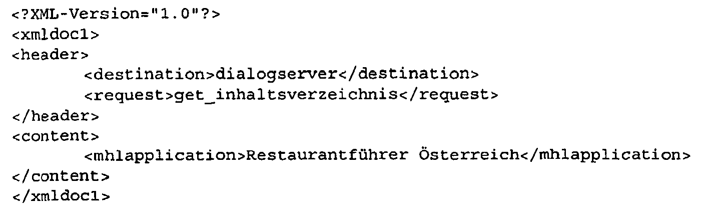

### Dialog-Server: Lieferung von Metadaten

Der Dialog-Server ermittelt die benötigten Metadaten (siehe Tab. 1, 2, 3, 4, 5) und erzeugt das folgende XML-Dokument, welches anschliessend an den Dialog-Client übertragen wird. Um die Darstellung zu vereinfachen, sind alle Metadaten zu Sets, Participating Entities, Set Entrances, Sequences bereits hier eingebettet, obwohl sie zum Grossteil erst später vom Dialog-Client benötigt werden. (Siehe auch Erläuterungen: → Datensemantik, → Set Entrance und Participating Entity).

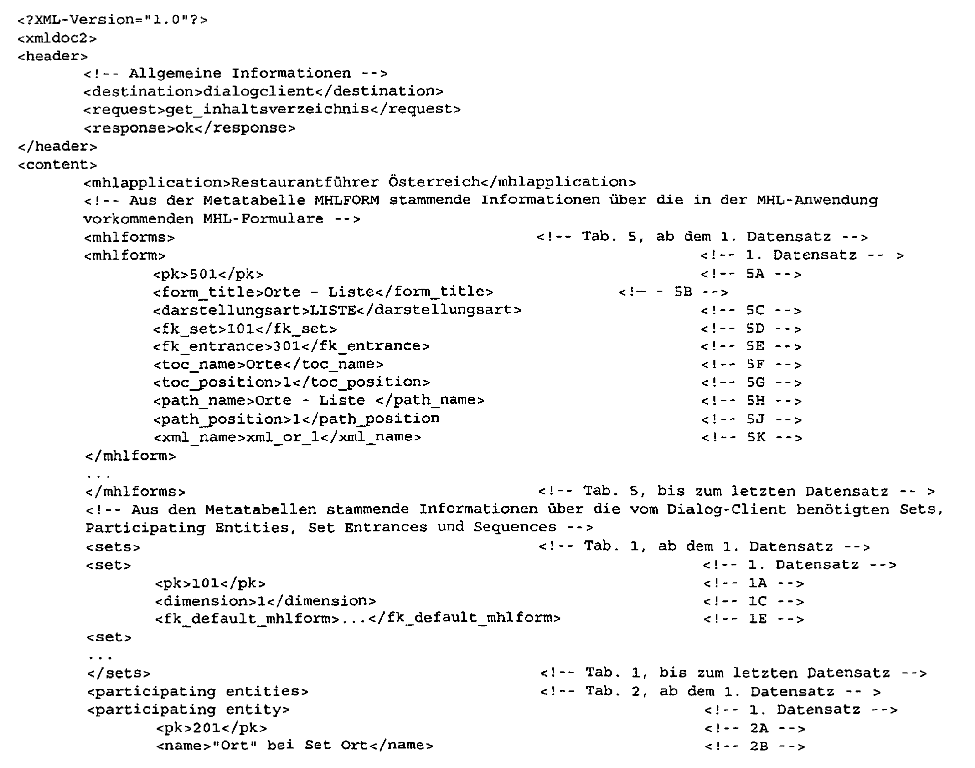

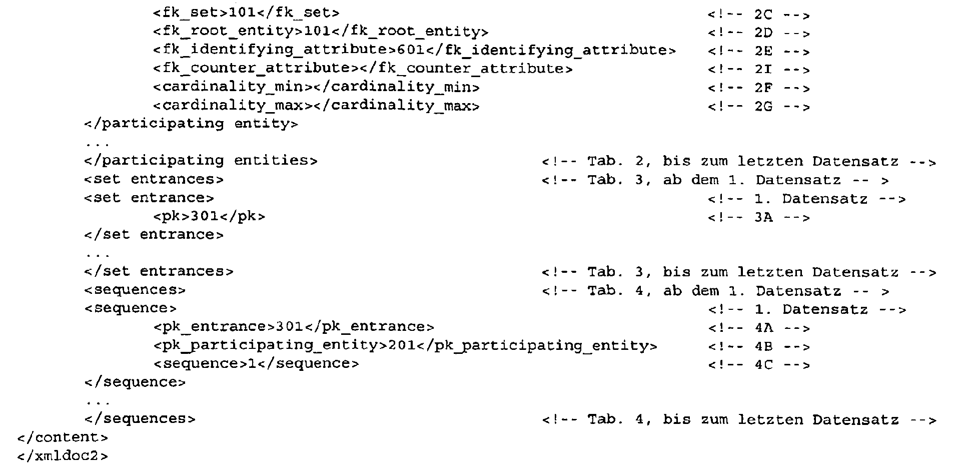

### Dialog-Client: Anzeige des Inhaltsverzeichnisses

Im Inhaltsverzeichnis wird für jedes XML-Element <mhlform>, bei dem <toc_position> ungleich 0 ist, ein Kapitel mit der Bezeichnung <toc_name> angezeigt. Die Reihenfolge der Kapitel richtet sich nach dem Wert von <toc_position>.

Die mit <xmldoc2> empfangenen Daten werden vom Dialog-Client für weitere Funktionen benötigt und daher aufgehoben.

### Anzeige eines MHL-Formulars

### Benutzeraktion

Der Benutzer wählt mit der linken Maustaste einen Eintrag aus dem Inhaltsverzeichnis ("Restaurants") aus.

### Dialog-Client: Request an den Dialog-Server

Der Dialog-Client ermittelt für den ausgewählten Eintrag den Primary Key (für mhlform.toc_name=Restaurants gilt: mhiform.pk=502) und sendet folgendes XML-Dokument an den Dialog-Server.

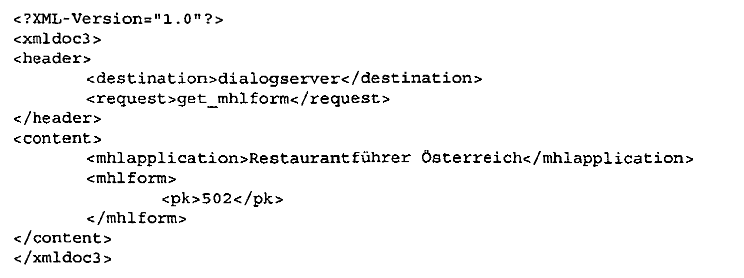

### Dialog-Server: Ermittlung der Meta- und Anwendungsdaten

Der Dialog-Server erzeugt aufgrund der Metadaten das folgende SQL-Statement zum Lesen der Anwendungsdaten (siehe Erläuterungen: → Dynamische Konstruktion von SQL-Statements) und bringt es anschliessend zur Durchführung.
SELECT
A.RE_PN,
B.OR_PN,
A.RE ADR,
A.RE_TELNR,
A.RE_DESCR,
A.RE_PK,
A.RE_OR_FK,
A.RE_PC_SP,
A.RE_PC_SP_AK,
B.OR_PC_RE
FROM Restaurant A
LEFT OUTER JOIN Ort B
ON A.RE_OR_FK=B.OR_PK
WHERE A.RE_PN >= ''
ORDER BY 1

### Dialog-Server: Die Meta- und Anwendungsdaten werden als XML-Dokument an den Dialog-Client gesendet

Der Dialog-Server verfügt nunmehr über alle relevanten Meta- und Anwendungsdaten. Er erzeugt das folgende XML-Dokument für den Dialog-Client.

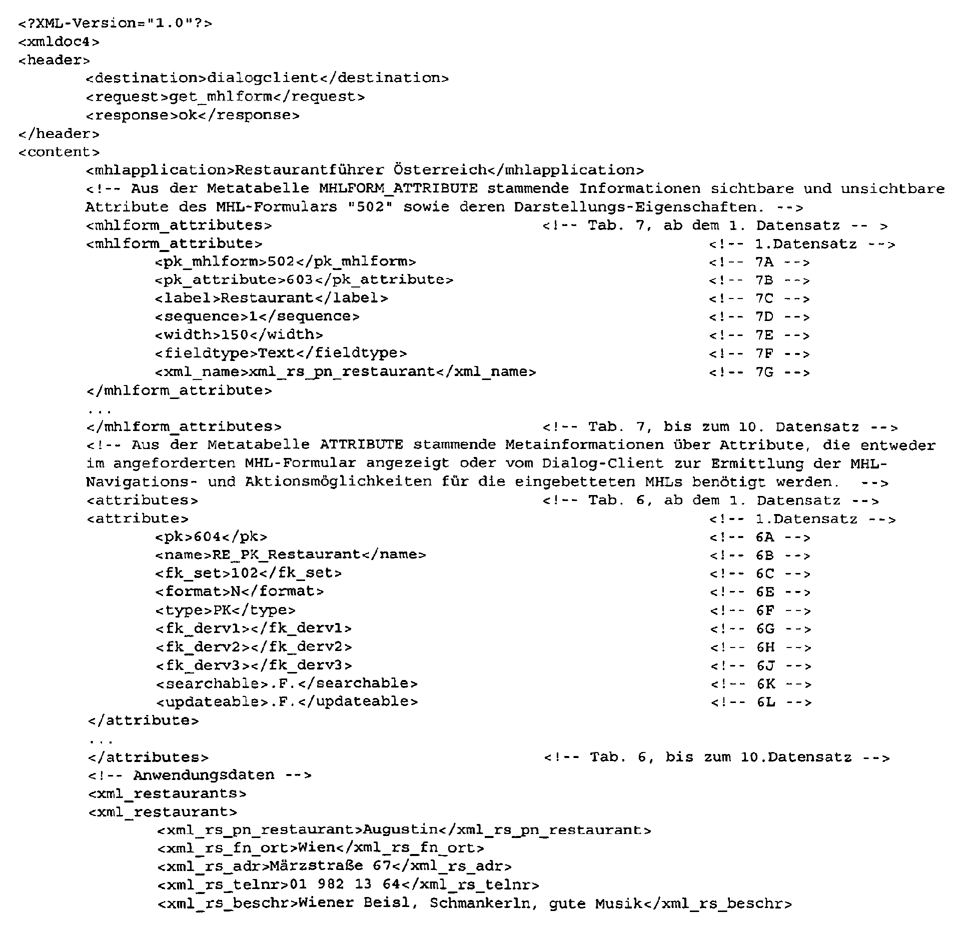

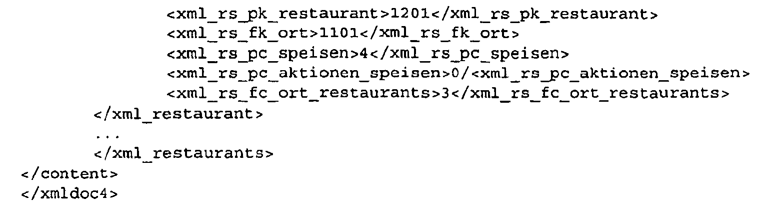

### Dialog-Client: Aufbereitung des MHL-Formulares

Unter Verwendung der mit 'xmldoc4' sowie der zuvor mit 'xmldoc2' übermittelten Meta- und Anwendungsdaten wird das MHL-Formular 'Restaurants' mit den zugehörigen Anwendungsdaten vom Dialog-Client angezeigt. Die für die spätere Verarbeitung wesentlichen Eigenschaften der angezeigten Objekte werden vom Dialog-Client aufbewahrt.

### MHL-Navigation

### Benutzeraktion

Der Benutzer führt auf einem im MHL-Formular ("Restaurants - Liste") eingebetteten MHL ("Servitenstüberl") einen rechten Mausklick durch.

### Dialog-Client: Anzeige der MHL-Pathlist

Der Dialog-Client ermittelt die für "Servitenstüberl" anzuzeigende MHL-Pathlist (siehe Erläuterungen: → Technische Anmerkungen zu semantischen Pfaden) und zeigt sie an. Dafür ist kein Request an den Dialog-Server erforderlich.

### Benutzeraktion

Der Benutzer führt in der MHL-Pathlist auf einem MHL-Path ("Speisekarte im Restaurant Servitenstüberl - Liste(5)") einen linken Mausklick durch.

### Dialog-Client: Request an den Dialog-Server

Vom Dialog-Client werden folgende Schritte durchgeführt:
1. Ermittlung des Primary Key zum ausgewählten MHL-Formular (mhlform.pk=506).
2. Ermittlung des Primary-Key-Value zum Ausgangs-Datenobjekt
   Aufbewahrt wurden die im Ausgangs-MHL-Formular "502" sichtbaren und unsichtbaren Attribute.
   Das Attribut "604" hat attribute.type="PK" und ist daher das gesuchte Primary-Key-Attribut.
   In Attribut "604" mit xml_name="xml_rs_pk_restaurant" findet sich beim Datensatz für den ausgewählten MHL der Primary-Key-Value "1202".
3. Erzeugung des XML-Dokumentes, welches den Request repräsentiert sowie anschliessende Übersendung an den Dialog-Server

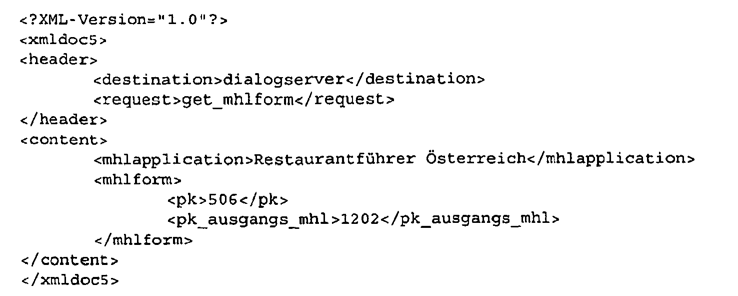

### Dialog-Server: Ermittlung der Meta- und Anwendungsdaten

Der Dialog-Server erzeugt aufgrund der Metadaten das SQL-Statement zum Lesen der Anwendungsdaten (siehe Erläuterungen: → Dynamische Konstruktion von SQL-Statements) und bringt es anschliessend zur Durchführung.

### Dialog-Server: Die Meta- und Anwendungsdaten werden als XML-Dokument an den Dialog-Client gesendet

Der Dialog-Server verfügt nunmehr über alle relevanten Meta- und Anwendungsdaten. Er erzeugt das folgende XML-Dokument für den Dialog-Client.

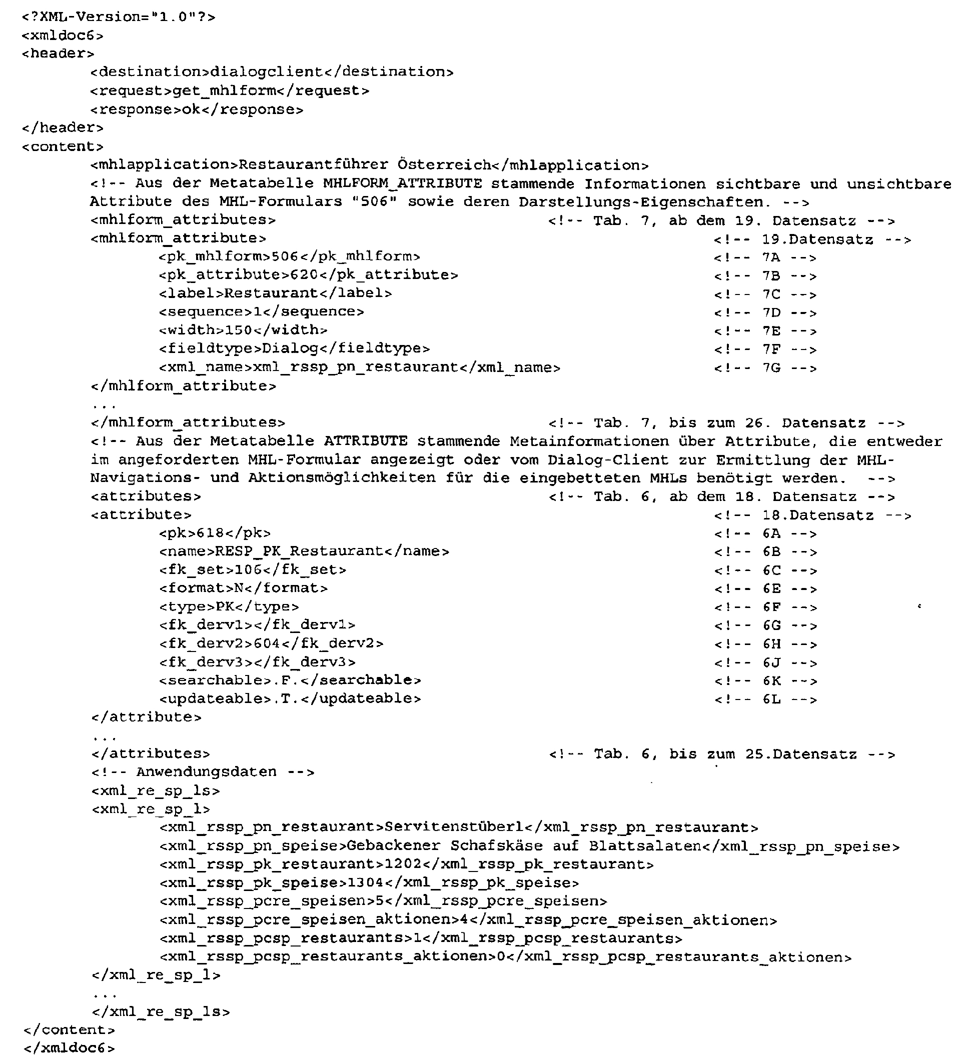

### Dialog-Client: Anzeige des MHL-Formulares

Das MHL-Formular "Restaurants und ihre Speisen - Liste" zeigt die zum Ausgangs-Datenobjekt "Servitenstüberl" in Kontext stehenden Ziel-Datenobjekte - sortiert gemäss dem verwendeten Set Entrance - an. Nun kann eine neue MHL-Navigation mit demselben Verfahren begonnen werden.

### Sonstige Funktionen: Anzeige des Default-MHL-Formulares zu einem MHL

Der Benutzer führt in einem MHL-Formular ("Restaurants - Liste") auf einem MHL ("Servitenstüberl") einen linken Mausklick durch. Der Dialog-Client ermittelt Primary-Key-Value ("1202") und Entität ("102") des Ausgangs-Datenobjekts.

Das anzuzeigende Default-MHL-Formular ist "503" (siehe <xmldoc2>. Für set.pk=102 ist set.fk_default mhlform=503).

Der Dialog-Client sendet daher folgendes XML-Dokument an den Dialog-Server:

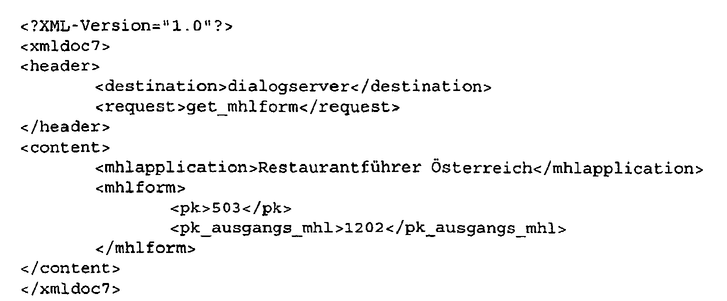

Der Dialog-Server ermittelt die vom Dialog-Client benötigten Anwendungs- und Metadaten (siehe Erläuterungen: →Dynamische Konstruktion von SQL-Statements) und sendet sie als XML-Dokument an den Dialog-Client. Dieser zeigt daraufhin das MHL-Formular "Restaurants -Detail" mit den zum Ausgangs-Datenobjekt identischen oder in Kontext stehenen Ziel-Datenobjekten an.

### Sonstige Funktionen: Anzeige eines verwandten MHL-Formulares

Beispiel: Der Benutzer führt in einem MHL-Formular ("Restaurant - Liste") einen linken Mausklick auf dem Button "Bild" durch. Der Dialog-Client ermittelt den Primary-Key-Value ("1202") sowie das Set ("102") des aktiven Ausgangs-Datenobjekts. Weiters ermittelt er aus den ihm zur Verfügung stehenden XML-Daten ein mit dem Ausgangs-MHL-Formular "502" verwandtes Ziel-MHL-Formular.

Sind zwei MHL-Formulare verwandt, dann gilt:
- Die Werte von mhlform.fk_set sind für beide MHL-Formulare gleich
- Die Werte von mhlform.fk_entrance sind für beide MHL-Formulare gleich
- Die Werte von mhlform.darstellungsart sind für die beiden MHL-Formulare üblicherweise verschieden

Da im Beispiel der Button "Bild" geklickt wurde, muss das Ziel-MHL-Formular mhlform.darstellungsart="BILD" haben. Es wird also das mit dem Ausgangs-MHL-Formular verwandte Ziel-MHL-Formular "510" ("Restaurant - Bilder") ermittelt und vom Dialog-Server für das Ausgangs-Datenobjekt "1202" angefordert. Das angeforderte MHL-Formular wird vom Dialog-Server erzeugt und an den Dialog-Client gesendet (siehe Erläuterungen: →Dynamische Konstruktion von SQL-Statements). Dieser zeigt daraufhin das MHL-Fonnular "Restaurants - Detail" mit den zum Ausgangs-Datenobjekt identischen oder in Kontext stehenden Ziel-Datenobjekten an.

Bei linkem Mausklick des Benutzers auf einen der Buttons "Detail", "Liste", "Sound", "Text", "Video" wird analog zum Beispiel das jeweilige verwandte Ziel-MHL-Formular ermittelt und angezeigt.

### Sonstige Funktionen: Suche

Bei der Standard-Suche führt der Benutzer in einem MHL-Formular einen linken Mausklick auf dem Button "Suchen" durch. Der Dialog-Client zeigt zum MHL-Formular das einfache Suchformular an, das alle jene Attribute enthält, nach denen gesucht werden kann (searchable=.T.). Der Benutzer gibt seine Suchbegriffe (Filterkriterien) ein. Als Alternativ-Variante kann über eine Menüfunktion die Profi-Suche aufgerufen werden, die dem Benutzer die selbständige Zusammenstellung von einfachen und komplexeren Suchbedingungen erlaubt. Suchbedingungen können mit UND bzw. ODER verknüpft werden, wobei auch das Setzen von Klammern möglich ist. Die einzelne Suchbedingung besteht dabei im allgemeinen aus <Attribut, Operator (=, >, <, etc.), Value>.

In beiden Such-Varianten prüft der Dialog-Client nach Abschluss der Benutzer-Eingabe die Suchbedingungen. Bei positiver Prüfung erzeugt er einen XML-Search-Request an den Dialog-Server und übermittelt dabei die eingegebenen Filterkriterien. Der Dialog-Server ermittelt mit dynamisch zur Runtime erzeugten SQL-Statements die gefilterten Anwendungsdaten sowie deren Metadaten (siehe Erläuterungen: →Dynamische Konstruktion von SQL-Statements). Das XML-Dokument mit den gefilterten Daten wird erzeugt und an den Dialog-Client gesendet. Der Dialog-Client zeigt das gefilterte MHL-Formular in List-Darstellung an.

### Sonstige Funktionen: Dätenänderung

Der Benutzer führt in einem MHL-Formular einen linken Mausklick auf dem Button "Ändern" durch. Der Dialog-Client zeigt zum MHL-Formular ein Änderungsformular an. Der Benutzer kann durch Eingaben in den änderbaren Feldern (bei attribute.updateable=.T.) nunmehr Einfüge-, Änderungs- und Löschaufträge erfassen. Zum Scope des gegenständlichen Verfahrens gehört ein automatisches mehrstufiges Validierungsverfahren für die eingegebenen Daten. Aufgrund von Konsistenzbedingungen, die entweder im DBMS oder in der Metadatenbank definiert sind (und über XML-Dokumente dem Dialog-Client mitgeteilt werden können) werden verschiedene Validierungen je nach Zweckmässigkeit entweder durch den Dialog-Client (Type-Validation, Mandatoryness, Nullability, Permitted Values,

Ranges, ...), durch den Dialog-Server oder durch die Anwendungsdatenbank (Referential Integrity, Stored Procedures) vorgenommen. Nach Erfassung des Auftrages wird bei positiver Dialog-Client-Validierung ein Insert-, Update- oder Delete-Request als XML-Dokument an den Dialog-Server gesendet. Nach positiver Dialog-Server-Validierung erzeugt dieser das dynamische SQL-Insert, SQL-Update oder SQL-Delete-Statement für die Aktualisierung der Anwendungsdaten. Ausserdem erzeugt der Dialog-Server die allenfalls erforderlichen SQL-Statements für die Aktualisierung der Counter-Spalten.

Wird z.B. ein neuer Datensatz für eine m:m-Relation zwischen Datenobjekten von zwei Entitäten eingebracht, dann werden auch die zugehörigen Counter-Attribute auf den Entitäts-Tabellen aktualisiert.

### Beispiel:

Es wird das Änderungsformular zum MHL-Formular "506" ("Restaurants und ihre Speisen - Liste") angezeigt. Der Benutzer erfasst für das Restaurant "1203" ("Wrenkh") und die Speise "1307" ("Spinatknödel") einen Einfüge-Auftrag und führt anschliessend einen linken Mausklick auf dem Button "Speichern" durch. Nach positiver Dialog-Client-Validierung wird der Insert-Request an den Dialog-Server gesendet, der folgende Aufgaben hat:
(1) Validierung der gesendeten Daten. Nach positiver Validierung erfolgen:
(2) Insert des neuen Datensatzes für die Relation zwischen Restaurant "1203" und Speise "1307"
(3) Update der Counter-Spalte für das Restaurant "1203", in der gezählt wird, wieviele Speisen im Restaurant "1203" geführt werden (Erhöhung um 1)
(4) Update der Counter-Spalte für die Speise "1307", in der gezählt wird, in wievielen Restaurants die Speise "1307" geführt wird (Erhöhung um 1)

### Technische Anmerkungen:

Der Dialog-Server stellt fest, dass ein Insert im Set "106" ("Restaurant führt Speise") erfolgen soll.

Zu diesem Set gehören die Participating Entities "207" und "208" (siehe Tab. 2, Spalte PK für FK_SET=106), für welche die zu aktualisierenden Counter-Attribute "611" und "616" (siehe Tab. 2, Spalte FK_COUNTER_ATTRIBUTE für PK=207 und PK=208) sowie die zugehörigen Identifying Attributes "618" und "619" (siehe Tab. 2, Spalte FK_IDENTIFYING_ATTRIBUTE für PK=207 und PK=208) existieren.

Wird ein Datensatz eingefügt oder gelöscht, so sind in beiden Counter-Attributen "611" und "616" Änderungen durchzuführen. Wird ein Datensatz geändert , so ist in den Counter-Attributen "611" bzw. "616" nur dann eine Änderung erforderlich, wenn das zugehörige Identifying Attribute "618" bzw. "619" geändert wird.

Bei dem gewählten Beispiel soll in der Tabelle REST_SPEISE ein Insert erfolgen. Dies führt zur Eintragungen von "1203" in der Spalte RESP_PK_Restaurant (siehe Tab. 6, Spalte COLUMN für PK=618) und "1307" in der Spalte RESP_PK_SPEISE (siehe Tab. 6, Spalte COLUMN für PK=619).

Nun ist zunächst das Counter-Attribut "611" im Set "102" (siehe Tab. 6, Spalte FK_SET für PK=611) zu aktualisieren. Dies bedeutet, dass die Counter-Spalte "RE_PC_SP" (siehe Tab. 6, Spalte COLUMN für PK=611) in Tabelle "RESTAURANT" (siehe Tab. 1, Spalte TABLE für PK=102) für das Restaurant "1203" um 1 zu erhöhen ist.

Analog dazu wird das Counter-Attribut "612" für die Speise " 1307" in der Tabelle SPEISE um 1 erhöht.

Die Datenänderungen auf den Tabellen REST_SPEISE, RESTAURANT und SPEISE erfolgen in einer Transaktion, um die Übereinstimmung der Aussagen in den Counter-Spalten der Tabellen RESTAURANT und SPEISE mit den Sachverhalten in der Tabelle REST_SPEISE zu gewährleisten.

Im Update- und Delete-Fall wird das beschriebene Verfahren sinngemäss angewendet (DELETE: i.a. Vermindern von Werten in Counter-Spalten, UPDATE: evtl. sowohl Erhöhen als auch Vermindern entsprechender Werte in Counter-Spalten). (Siehe Erläuterungen: → Set Entrance und Participating Entity).

### Sonstige Funktionen: Personalisierung

Der Benutzer führt in der MHL-Pathlist einen linken Mausklick auf dem Button "Personalisieren" durch. Der Dialog-Client zeigt daraufhin das Personalisierungs-Formular für Semantische Mengen (siehe Erläuterungen: →Datensemantik) an. Der Benutzer kann nunmehr angeben, welche der möglichen Semantischen Pfade zu den Semantischen Mengen in seiner persönlichen MHL-Pathlist angezeigt werden sollen. Weiters kann er angeben, ob einzelne Semantischen Pfade auch dann angezeigt werden sollen, wenn sie zu leeren Ziel-Datenmengen führen. Diese Angaben werden bei der MHL-Navigation berücksichtigt. Zum Scope des Verfahrens gehört auch die Personalisierung des Inhaltsverzeichnisses.

### Erläuterungen

### Allgemeine Erläuterungen zum Verfahren

### Datensemantik

Dem in der Metadatenbank abgelegten Semantischen Modell liegt eine spezielle Datensemantik zugrunde, mit der die Entity-Relationship-Methode (ER-Methode) um Eigenschaften erweitert wird, die das gegenständliche Verfahren erst ermöglichen. Für das dargelegte Verfahren werden u.a. folgende Syntax-Elemente verwendet:

### Entitätsartige Mengen:

- Entität

### Semantische Verbindungen zwischen Entitätsartigen Mengen:

- Standard-Relation zwischen 2 Entitäten (z.B. Relationships zwischen 2 Entitäten mit den Kardinalitäten m:m, m:1, 1:m, oder l:l)
- Mehr als eine Relation zwischen 2 Entitäten (Bsp.: "Währung ist-Landeswährung-in Land", "Währung ist-Zahlungsmittel-in Land")
- Spezial-Relation zwischen Entitäten (z.B. A ident B, A hierarchisch-übergeordnet B, A rekursiv-verbunden-mit A (Bsp.: "Person ist-Eltemteil-von Person"), A hat-Relation-zu File B)
- Relation zwischen 3 oder mehr Entitäten (Bsp.: "Restaurant führt Speise in Aktionswoche" ist eine 3-dimensionale Relation mit Kardinalität m:m:m), auch bei teilweiser oder gänzlicher Rekursivität

Semantische Verbindungen werden auch als Beziehungs-Mengen bezeichnet, Entitätsartige Mengen und Beziehungs-Mengen werden als "Semantische Mengen" (Sets) bezeichnet und in die Metatabelle "SET" eingetragen (siehe Tab. 1). Elemente von Semantischen Mengen werden als "Datenobjekte" bezeichnet. Datenobjekte erben die Eigenschaften ihrer Semantischen Mengen.

Mit dem gegenständlichen Verfahren werden ausschliesslich Semantische Verbindungen zwischen Entitätsartigen Mengen definiert. Es ist nicht möglich, Semantische Verbindungen zwischen einzelnen Datenobjekten oder einzelnen Hyperlinks, die nicht zu einer Semantischen Menge gehören, zu definieren.

### Weitere Syntax-Elemente:

### Attribute, Formate von Attributen, Kardinalitäten von Beziehungs-Mengen,...

- Die Attribute einer Semantischen Menge sind alle jene Eigenschaften, welche deren Datenobjekten aus Gründen der ER-Methode, der Datenspeicherung, des Datentransports oder der Anzeige im Dialog zuzuordnen sind. Dies umfasst zunächst jene Eigenschaften, zu denen es auf der Table der Semantischen Menge Columns gibt. Weiters umfasst dies Eigenschaften, die im Dialog über die Datenobjekten einer Semantischen Menge benötigt werden (Bsp.: Das Attribut "RE_FN_Ortsname" ist ein Attribut des Set "Restaurant", obwohl es dafür keine Column in der Table "RESTAURANT" gibt. Das Attribut wird jedoch im Dialog über die Semantische Menge der Restaurants benötigt.). Attribute werden in die Tabelle ATTRIBUT eingetragen (siehe Tab. 6).
- Formate von Attributen: im wesentlichen analog zur ER-Methode (siehe Tab. 6)
- Kardinalitäten: Es können Kardinalitäten für n-dimensionale Relationen definiert werden (siehe Tab. 2)

### Participating Entities, Set Entrances, Sequences von Set Entrances,...

Charakteristische Elemente für das gegenständliche Verfahren (siehe Erläuterungen: → Set Entrance und Participating Entities, siehe Tab. 2, Tab. 3, Tab. 4).

Der Semantische Kontext geht aus dem Pfadnamen hervor (siehe Erläuterungen:→ MHL-Navigation, → Semantischer Pfad). Er erschöpft sich nicht in der Beschreibung einer Semantischen Verbindung, sondern bezieht sich u.a. auch auf den Set Entrance (Beispiel: Es ist semantisch nicht dasselbe, ob man zu einem Restaurant die Speisen anzeigt oder zu einer Speise alle Restaurants, in denen die Speise geführt wird. In beiden Fällen handelt es sich aber um dieselbe Beziehungs-Menge. (Siehe Erläuterungen: → Technische Anmerkungen zu semantischen Pfaden, → Set Entrance und Participating Entity)). Die mit den obigen Syntax-Elementen durchgeführte Beschreibung des Modells von relationalen (und in Files abgelegten) Anwendungsdaten bildet das Semantische Modell.

### MHL-Navigation und Semantischer Kontext

Die MHL-Navigation führt von einem im Ausgangs-MHL-Formular angezeigten Ausgangs-MHL (siehe Erläuterungen: → Multihyperlink) über die Liste der Semantischen Pfade zu einem Ziel-MHL-Formular (Siehe Erläuterungen: → Technische Anmerkungen zu Semantischen Pfaden). Der Ausgangs-MHL repräsentiert ein Ausgangs-Datenobjekt, für das jeder Pfad einen Semantischen Kontext zu Ziel-Datenobjekten herstellt, die in einem Ziel-MHL-Formular auf bestimmte Art dargestellt werden. Soferne von den Ziel-Datenobjekten oder von deren Eigenschaften eine weitere MHL-Navigation möglich ist, werden diese als MHLs angezeigt.

### Am beschriebenen Beispiel:

"Servitenstüberl" repräsentiert das Ausgangs-Datenobjekt (Abb. 4). Nach rechtem Mausklick wird die Liste der Semantischen Pfade angezeigt (Abb. 6). Über den Semantischen Pfad "Speisekarte im Restaurant Servitenstüberl - Liste(5)" erfolgt die Navigation zum Ziel-MHL-Formular "Restaurants und ihre Speisen - Liste". Es werden genau jene 5 Ziel-Datenobjekte (2-Tupel aus Restaurant und Speise) angezeigt, die mit "Servitenstüberl" in Semantischem Kontext stehen (Abb. 7). Sowohl von den angezeigten Restaurants als auch von den Speisen ist eine weitere MHL-Navigation möglich, daher werden diese als MHLs angezeigt.

In anderen Ausprägungen der MHL-Navigation wird die MHL-Pathlist angezeigt, wenn auf dem Ausgangs-MHL ein LeftClick stattfindet (die Anzeige des Default-MHL-Formulares wird dann z.B. durch DblClick ausgelöst), oder wenn der Benutzer sich mit der Maus über den MHL bewegt (mouseEntered-Event).

### Multihyperlink

Multihyperlinks (MHLs) sind im Dialog angezeigte identifizierende Attribute von Datenobjekten aus Semantischen Mengen, zu denen aufgrund der definierten Metadaten sowie den vorhandenen Anwendungsdaten Semantische Pfade existieren (siehe Erläuterungen: → Datensemantik).

Insbesondere können als Multihyperlinks dargestellt werden:
(1) Primary Keys
(2) Primary Names: Namen von Datenobjekten, die im Dialog anstatt oder zusätzlich zum Primary Key angezeigt werden
(3) Primary Images: Bilder von Datenobjekten, die im Dialog anstatt oder zusätzlich zum Primary Key angezeigt werden
(4) Foreign Keys
(5) Foreign Names: Namen von Datenobjekten, die im Dialog anstatt oder zusätzlich zum Primary Key angezeigt werden
(6) Foreign Images: Bilder von Datenobjekten, die im Dialog anstatt oder zusätzlich zum Foreign Key angezeigt werden

### Am Beispiel "Restaurants - Liste" (siehe Abb.4):

"Servitenstüberl" ist ein Primary Name, der anstatt des Primary Key angezeigt wird. "Wien" ist ein Foreign Name, der anstatt des Foreign Key angezeigt wird. "Servitenstüberl" und "Wien" repräsentieren somit zwei unterschiedliche Datenobjekte (das Restaurant "Servitenstüberl" und den Ort "Wien"), zu denen es aufgrund von Metamodell und Anwendungsdaten Semantische Pfade gibt und die daher als MHLs dargestellt werden.

### Semantischer Pfad

Der Semantische Pfad (MHL-Path) informiert den Benutzer über Ausgangspunkt, Weg und Ziel einer MHL-Navigation und stellt damit den Semantischen Kontext zwischen Ausgangspunkt und Ziel her. Das beschriebene Verfahren ermöglicht die Anzeige von Informationen, die den Benutzer bei der Entscheidung unterstützen, ob er die MHL-Navigation durchführen soll. So wird z.B. der Pfadname zur Design-Time festgelegt, wobei Platzhalter verwendet werden können, die zur Runtime mit individuellen Informationen ersetzt werden.

### Am Beispiel:

Aus dem zur Design-Time angegebenen Pfad "Speisekarte im Restaurant #NAME# - Liste (#CNT#) entsteht zur Runtime der Pfadname "Speisekarte im Restaurant Servitenstüberl - Liste (5)". Er enthält folgende Informationen:
(1) Name des Ausgangs-Datenobjekts
   Der Platzhalter #NAME# wird zur Runtime durch "Servitenstüberl" ersetzt.
(2) Bezeichnung der Semantischen Verbindung zwischen Ausgangs-Datenobjekt und Ziel-Datenmenge "Speisekarte im Restaurant ..."
(3) Hinweis auf die Darstellungsart des Ziel-MHL-Formulares (siehe Tab. 5, Spalte DARSTELLUNGSART) "... Liste ..."
(4) Hinweis auf die Art des Einstiegs (Set Entrance) in die Ziel-Datenmenge
   "Speisekarte im Restaurant ...". Dies weist darauf hin, dass die Ziel-Datenmenge "von einem Restaurant aus" betreten wird und zu diesem die Speisen anzeigt werden.
(5) Anzahl der Datenobjekte der Ziel-Datenmenge

Der Platzhalter #CNT# wird zur Runtime durch "5" ersetzt. Die Anzahl der Ziel-Datenobjekte ergibt sich aus dem Wert des Counter-Attributs (siehe Beispiel, Sonstige Funktionen: Datenänderungen)

Zum Scope des Verfahrens gehören auch weitere Informationen zum MHL-Path, wie z.B. "Letzte Änderung am", "Letzte Änderung von", "Anzahl neue Elemente", "Voraussichtliche Dauer bis zur Ergebnisanzeige", "Kosten der Abfrage".

Aus der Metadatenbank geht hervor, zwischen welchen Semantischen Mengen über Semantische Pfade navigiert werden kann. Damit sind die potenziellen Navigationsmöglichkeiten für die Datenobjekte der Semantischen Mengen (z.B. für die Restaurants, die Speisen, die Orte,...) festgelegt. Für ein bestimmtes Ausgangs-Datenobjekt (z.B. "Servitenstüberl") wird ein potenzieller Semantischer Pfad (z.B. "Speisekarte im Restaurant #NAME - Liste (#CNT)") dann in der MHL-Pathlist angezeigt, wenn er werthabend ist und somit zu einer nichtleeren Zielmenge führt (siehe Erläuterungen: → Technische Anmerkungen zu Semantischen Pfaden). Die Liste der Semantischen Pfade enthält also zu jedem MHL einer gegebenen MHL-Anwendung ein individuelles Angebot von Semantischen Pfaden, obwohl in die Metadatenbank keinerlei Pfade für individuelle MHLs oder Datenobjekte eingetragen werden.

### Ziel-MHL-Formular

Jeder Semantische Pfad führt zu einem Ziel-MHL-Formular, in dem Attributnamen und Attribut-Values der mit dem Ausgangs-Datenobjekt in Semantischem Kontext stehenden Ziel-Datenobjekte in bestimmter Weise dargestellt werden. Ziel-MHL-Formulare zu einem Ausgangs-Datenobjekt unterscheiden sich in mindestens einem der folgenden Kriterien:
(1) dem Semantischen Kontext zwischen Ausgangs-Datenobjekt und Ziel-Datenobjekten
(2) der Darstellungsart des Ziel-MHL-Formulares

### Technische Erläuterungen zum Verfahren

Im folgenden werden der Einfachheit halber nur solche Fälle erläutert, bei denen die Semantische Menge zum Ausgangs-Datenobjekt eine Entität ist.

### Set Entrance und Participating Entity

Set Entrances (Semantische Einstiege in Mengen) und Participating Entities dienen dem semantisch bestimmten Zugriff auf Ziel-Datenmengen zugegriffen. Sie werden verwendet, um
(1) mehrere Zugriffsarten auf eine Ziel-Datenmenge zu ermöglichen
(2) die zu einem Ausgangs-MHL anzeigbaren Pfade zu ermitteln
(3) bei der MHL-Navigation die Where-Bedingung zu konstruieren und damit genau die mit dem Ausgangs-Datenobjekt in Kontext stehenden Ziel-Datenobjekte auszuwählen

### ad (1):

Participating Entities sind die schlüsselbildenden Entitäten für ein Set. Sei ***D*** die Dimension eines Set. Dann gibt es zu diesem Set ***D*** Participating Entities (siehe Tab. 2).

### Beispiele:

- Entitäten haben die Dimension 1, wofür eine Participating Entity genügt.
- Für Standard-Relationen wie etwa 'Restaurant liegt in Ort' (m:l) und 'Restaurant führt Speise' (m:m) mit Dimension 2 werden 2 Participating Entities benötigt.
- Rekursive Relationen wie etwa "Person-ist-Elternteil-von-Person" haben die Dimension 2 und damit ebenfalls 2 Participating Entities, um sowohl von der Eltern-Person als auch von der Kind-Person aus auf die Menge zugreifen zu können.
- Die Relation 'Restaurant führt Speise in Aktionswoche' (m:m:m) ist ein Beispiel für Dimension 3 und somit 3 Participating Entities, damit von jeder der schlüsselbildende Entitäten "Restaurant", "Speise" und "Aktionswoche" aus auf die Menge zugegriffen werden kann.

Es können zu einem Set maximal ***D**! (**D*** Fakultät) Set Entrances definiert werden (siehe Tab. 3).

Der Set Entrance ist definiert durch die für ihn charakteristische Reihung der Participating Entities (siehe Tab. 4).

Zwei verschiedene Set Entrances zu ein- und demselben Set unterscheiden sich hinsichtlich:
- der Gesamt-Reihung ihrer Participating Entities, wodurch unterschiedlichen Zugriffsarten auf die Ziel-Datenmenge definiert werden
- der zugehörigen MHL-Formulare
- der Sortierung der im Ziel-MHL-Formular angezeigten Daten

### ad (2):

Die im Set Entrance erstgereihte Participating Entity trifft eine Vorentscheidung darüber, ob die Pfade für jene MHL-Formulare, die den Set Entrance verwenden, in einer MHL-Pathlist angezeigt werden können (siehe Erläuterungen: → Technische Anmerkungen zu Semantischen Pfaden).

### ad (3):

Bei der MHL-Navigation sucht der Dialog-Server mit dem Primary-Key-Value des Ausgangs-Datenobjekts nach den in Kontext stehenden Ziel-Datenobjekten. Die Ziel-Datenmenge besteht zunächst aus allen jenen Datensätzen, bei denen der "Spalten-Value des Identifying Attribute der erstgereihten Participating Entity des verwendeten Set Entrance" identisch ist mit dem Primary-Key-Value des Ausgangs-Datenobjekts. Diese Ziel-Datenmenge wird noch ergänzt um weitere Attribute, die im Ziel-MHL-Formular "mitangezeigt" werden sollen.

Am beschriebenen Beispiel (siehe Erläuterungen: → Dynamische Konstruktion von SQL-Statements):

Der vom Dialog mitgegebene Primary-Key-Value zum Ausgangs-Datenobjekt ist "1202".

Das Ziel-MHL-Formular ist "506", es verwendet den Set Entrance "307" (siehe Tab. 5).

Die zum Set Entrance "307" erstgereihte Participating Entity ist "207" (siehe Tab. 4), sie verwendet als Identifying Attribute das Attribut "618" (siehe Tab. 2, Spalte FK_IDENTYFING_ATTRIBUTE).

Das Attribut "618" hat den Spaltennamen RESP_PK_RE (siehe Tab. 6, Spalte COLUMN) und gehört zum Set "106" (siehe Tab. 6, Spalte FK_SET) und den Tabellennamen "REST_SPEISE".

Die Ziel-Datenmenge besteht daher zunächst aus allen Datensätzen der Tabelle REST_SPEISE, bei denen die Spalte RESP_PK_RE den Wert "1202" aufweist.

Somit kann unter Verwendung des Tabellen-Alias folgende Where-Bedingung gebildet werden: WHERE
A.RESP_PK_RE=1202

Mit dieser Where-Bedingung werden die im Restaurant "Servitenstüberl" geführten Speisen gefunden.

### Dynamische Konstruktion von SQL-Statements

Technische Anmerkungen anhand des beschriebenen Beispiels:

Der Dialog-Server bekommt vom Dialog-Client den Request, ein bestimmtes MHL-Formular in XML-Form zu liefern. Das hier beispielhaft beschriebene Verfahren wird für folgende Funktionen angewendet:
(1) Anzeige eines MHL-Formulars / Dialog-Server: Ermittlung der Meta- und Anwendungsdaten
(2) MHL-Navigation / Dialog-Server: Ermittlung der Meta- und Anwendungsdaten
(3) Sonstige Funktionen: Anzeige des Default-MHL-Formulares zu einem MHL
(4) Sonstige Funktionen: Anzeige eines verwandten MHL-Formulares
(5) Sonstige Funktionen: Suche

Bei den Funktionen (2), (3) und (4) - wird vom Dialog-Client der Primary-Key-Value des Ausgangs-Datenobjekts mitgegeben.

### Am beschriebenen Beispiel:

### Sei

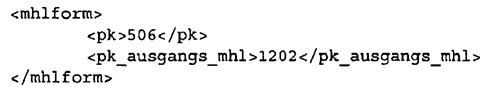

die Anforderung des Dialog-Client an den Dialog-Server (siehe Beispiel, mhlform5).

Dann erzeugt der Dialog-Server zur Runtime das folgende SQL-Statement zum Lesen der Anwendungdaten:
SELECT
B.RE_PN,
C.SP_PN,
A.RESP_PK_RE,
A.RESP_PK_SP,
B.RE_PC_SP,
B.RE_PC_SP_AK,
C.SP_PC_RE,
C.SP_PC RE_AK
FROM Rest_Speise A
LEFT OUTER JOIN Restaurant B
ON A.RESP_PK_RE=B.RE_PK
LEFT OUTER JOIN Speise C
ON A.RESP_PK_SP=B.SP_PK
WHERE
A.RESP_PK_RE=1202
ORDER BY 1,2

Dazu führt er folgende Schritte durch:

### 1. Konstruktion der From-Klausel

Das MHL-Formular "506" bezieht sich auf das Set "106" (siehe Tab. 5, Spalte FK_SET).

Zum Set "106" heisst die Haupttabelle daher REST_SPEISE (siehe Tab. 1, Spalte TABLE).

Die From-Klausel heisst daher "FROM Rest_Speise A"

### 2. Konstruktion der zu lesenden Columns und Tables

Aus der Tabelle MHLFORM_ATTRIBUTE ergibt sich, welche Attribute im MHL-Formular benötigt "506" benötigt werden und wie sie zu reihen sind (siehe Tab. 7, Spalte SEQUENCE).

Für jedes Attribut werden Tabellenname und Spaltenname ermittelt. Einige Attribute können direkt von der HauptTabelle gelesen werden. So können z.B. die Attribute "618" und "619" direkt von der Table "REST_SPEISEN" gelesen werden (siehe Tab. 6, Spalte FK_DERV3="").

Die Attribute "620" bis "625" sind jedoch über die Konstruktion einer JOIN-Bedingung "herbeizujoinen". So ist etwa das Attribut "620" vom Attribut "605" herbeizujoinen (siehe Tab. 5, Spalte FK_DERV3).

Das Attribut "605" gehört zum Set "102" und hat daher Tabellenname "RESTAURANT" (siehe Tab. 1, Spalte Table für PK=102) und Spaltenname RE_PN (siehe Tab. 6, Spalte COLUMN für PK=605).

Analog dazu werden die Tabellen- und Spaltennamen für die "herbeizujoinenden" Attribute "621" bis "625" ermittelt.

### 3. Konstruktion der Left-Outer-Join-Bedingungen

Für die Attribute "620", "622" und "623" wird nur eine einzige Join-Bedingung benötigt, da bei diesen die Werte von FK_DERV1 ("618", siehe Tab. 6) und FK_DERV2 ("604", siehe Tab. 6) identisch sind. Der Tabellenname für die Tabelle, von welcher die Attribute "herbeizujoinen" sind, wurde bereits ermittelt ("RESTAURANT"). Der andere Tabellenname steht auch bereits fest - es ist der Name der Haupttabelle ("REST_SPEISEN"). In die Join-Bedingung gehen noch die Spaltennamen für FK_DERV1=618 ("RESP_PK_RE", siehe Tab. 6) und FK_DERV2=604 ("RE_PK") ein. Das "Herbeijoinen" der Attribute "621", "624" und "625" funktioniert analog.

### 4. Konstruktion der Where-Bedingung

Wurde vom Dialog-Client ein Primary-Key-Value des Ausgangs-Datenobjekt mitgegeben, dann siehe Erläuterungen:Set Entrance. Andernfalls ist keine Where-Bedingung erforderlich. Zum Scope des Verfahrens gehören weiters Mechanismen zur performancegünstigen Anzeige einer limitierten Anzahl von Ziel-Datenobjekten.

### 5. Konstruktion der Sortierfolge

Da es sich um den Einstieg in eine 2-dimensionale Menge handelt, wird nach den Primary-Name-Attributen "620" und "621" sortiert.

### 6. Konstruktion des Gesamt-SQL-Statements

Der Dialog-Server setzt die einzelnen Teilstrings zu einem syntaktisch korrekten SQL-Statement zusammen.

Mit dem gegenständlichen Verfahren können je nach Funktion sowie abhängig von Persistenz- und Dialogmodell unterschiedliche Typen von SQL-Statements erzeugt werden. Die SQL-Zugriffe auf Anwendungsdaten können ergänzt werden um Zugriffe auf Files, die gemeinsam mit den relationalen Anwendungsdaten an den Dialog-Client geliefert werden sollen.

### Technische Anmerkungen zu semantischen Pfaden

Jeder Semantische Pfad zu einem Ausgangs-Datenobjekt genügt den folgenden Bedingungen:
(1) Das zum Semantischen Pfad gehörende Ziel-MHL-Formular verwendet einen Set Entrance, der als erstgereihte Participating Entity eine solche hat, deren Root-Entity (siehe Tab. 2, Spalte FK_ROOT_ENTITY) gleich ist mit der Ausgangs-Entität (Entität des Ausgangs-Datenobjekts). Damit wird gewährleistet, dass die Ziel-Datenobjekte in Kontext mit dem Ausgangs-Datenobjekt stehen (siehe Erläuterungen: → Dynamische Konstruktion von SQL-Statements, Schritt 4).

### Im Beispiel:

Es soll für das MHL-Formular "506" geprüft werden, ob dessen Path in der Pathlist zum Ausgangs-Datenobjekt "Servitenstüberl" anzuzeigen ist.

Zum Ausgangs-Datenobjekt verfügt der Dialog-Client noch über den zugehörigen Primary-Key-Value "1202" und das zugehörige Primary-Key-Attribut "604".

Er ermittelt nun die Ausgangs-Entität "102" (siehe Tab. 6, Spalte FK_SET für PK=604).

Das zu prüfende MHL-Formular "506" verwendet den Set Entrance "307" (siehe Tab. 5, Spalte FK_ENTRANCE für PK=506).

Dieser hat als erstgereihte Participating Entity "207" (siehe Tab. 4 für PK_ENTRANCE=307 und SEQUENCE=1).

Die Participating Entity "207" hat als Root-Entity "102" (siehe Tab. 2, Spalte FK_ROOT_ENTITY für PK=207).

Da die Root-Entity gleich ist mit der Ausgangs-Entität "102", genügt MHL-Formular "506" der Bedingung (1).
(2) Im Ziel-MHL-Formular wird mindestens ein Ziel-Datenobjekt angezeigt, das (a) mit dem Ausgangs-Datenobjekt in Kontext steht oder (b) mit ihm identisch ist. Dies ist für (a) dann gegeben, wenn das entsprechende Counter-Attribut für das Ausgangs-Datenobjekt einen Wert > 0 aufweist. Der Fall (b) kann etwa eintreffen, wenn Ausgangs-MHL-Formular und Ziel-MHL-Formular miteinander verwandt sind (siehe Beispiel, Sonstige Funktionen).

### Im Beispiel:

Es soll für das MHL-Formular "506" geprüft werden, ob dessen Path in der Pathlist zum Ausgangs-Datenobjekt "Servitenstüberl" anzuzeigen ist.

Das Ausgangs-Datenobjekt hat "1202" als Ausgangs-Primary-Key-Value und "102" der Ausgangs-Set (Ermittlung wie bei (1)).

Im zu prüfenden MHL-Formular "506" werden Datenobjekte des Set "106" angezeigt (siehe Tab. 5, Spalte FK_SET für PK=506) und damit zu einem anderen Set als "102". Es muss daher untersucht werden, ob es in "106" Elemente gibt, die mit "1202" in Kontext stehen.

Das entsprechende Counter-Attribut findet sich bei der erstgereihten Participating Entity für den verwendeten Set Entrance.

Die erstgereihte Participating Entity zu "506" ist "207" (Ermittlung wie bei (1)).

Die Participating Entity "207" hat das Counter Attribute "611" (siehe Tab. 2, Spalte FK_COUNTER_ATTRIBUTE für PK=207).

Das Counter Attribute 611 hat den Spaltennamen RE_PC_SP (siehe Tab. 6, Spalte COLUMN für PK=611).

Das Counter Attribute 611 gehört zum Set 102 (siehe Tab. 5, Spalte FK_SET für PK=611) und hat daher den Tabellennamen RESTAURANT (Tab. 1, Spalte TABLE für PK=102).

Für das Ausgangs-Datenobjekt mit Primary Key "1202" findet sich in der Tabelle RESTAURANT, Spalte RE_PC_SP der Wert 5 (siehe Tab. 12, Spalte RE_PC_SP für PK_RE=1202).

Dies bedeutet, dass in der Ziel-Datenmenge 5 Ziel-Datenobjekte vorkommen, die mit dem Ausgangs-Datenobjekt in Kontext stehen. Das MHL-Formular "506" genügt also der Bedingung (2).
(3) Das zum Semantischen Pfad gehörende Ziel-MHL-Formular hat eine Path-Position >0.

Dies ist für das MHL-Formular "506" gegeben (siehe Tab. 5, Spalte PATH_POSITION für PK=506).

Da alle Bedingungen erfüllt sind, wird MHL-Formular "506" mit seinem PATH_NAME in die MHL-Pathlist aufgenommen, wobei für #NAME# der Wert "Servitenstüberl" und für #CNT# "5" als Wert des Counter-Attributes eingesetzt wird. Semantische Pfade, die in die MHL-Pathlist aufgenommen werden, werden nach der Path-Position gereiht. Die hier beschriebene Logik, nach der entschieden wird, welche Semantischen Pfade in der MHL-Pathlist für ein Ausgangs-Datenobjekt angezeigt werden, wird vom Dialog-Client durchgeführt. Dieser verwendet jedoch nicht die Anwendungs- und Metatabellen, sondern die als XML-Dokument gelieferten Anwendungs- und Metadaten. Anmerkung: In der zum Scope des Verfahrens gehörenden "Erweiterten MHL-Pathlist" muss Bedingung (2) nicht erfüllt sein.

### Erläuterungen zu charakteristischen Eigenschaften

### MHL-Anwendungen

Das beschriebene Verfahren eignet sich für relational-multimediale Datenbank-Anwendungen, bei denen relationale Daten miteinander sowie mit filebasierten multimedialen Daten in Semantischem Kontext stehen. In solchen MHL-Anwendungen können alle relationalen Daten angezeigt, navigiert, gesucht und geändert werden. Filebasierte Daten (z.B. HTML-Files, Bilder, Sounds, Videos) können innerhalb der Anwendung jedoch nur angezeigt, navigiert, gesucht und mit relationalen Elementen verknüpft, nicht jedoch geändert werden. Eine anwendungsspezifische Programmierung ist nicht erforderlich. Inhaltsverzeichnis und MHL-Pathlists können gemäss den Benutzer-Berechtigungen und - Wünschen (Personalisierung) aufbereitet werden. Damit sind alle Dialog-Kernfunktionen für relationale Datenbank-Anwendungen abgedeckt. Weiters gehört es zum Scope des Verfahrens, einzelne Kern-Funktionen (MHL-Formulare, Inhaltsverzeichnis, Suche, etc.) als Komponenten in andere Technologien (z.B. HTML-Dokumente) einzubetten.

### Anwendungsmodell und Funktionalität

In der Metadatenbank sind Semantisches Modell (Sets, Attributes,...), Persistenzmodell (Tabellen, Spalten,...), Transportmodell (XML-Notation für die Anwendungs- und Metadaten,...) und Dialogmodell (MHL-Formulare, Darstellung von Attributnamen und Attribut-Values, ...) sowie die Zusammenhänge zwischen diesen Modellen abgelegt. Das beschriebene Verfahren setzt das in der Metadatenbank abgelegte Anwendungsmodel automatisch in Dialog-, Datentransport- und Datenzugriffs-Funktionalität um.

### Navigationsparadigma

Mit dem beschriebenen Verfahren kann zu relational-multimedialen Anwendungsdaten ein netzwerkartiger Navigations-Dialog erzeugt werden, der folgende Eigenschaften aufweist:

### (1) Vollständigkeit der Ausgangsknoten für die Navigation

### Seien

- ***APP*** eine beliebige relational-multimediale Datenbank-Anwendung,
- ***APPDATA*** die über Primary Keys, Foreign Keys und Verweise auf Files vernetzten Anwendungsdaten von ***APP***
- ***DS*** eine zur Beschreibung von ***APP*** verwendete Datensemantik
- ***FORMS*** die zur Anzeige von ***APPDATA*** definierten Formulare

Dann ist das in einem Formular angezeigte Attribut ATT ein potenzieller Ausgangsknoten für die Navigation, wenn
(1) es sich um ein identifizierendes Attribut für ein Datenobjekt aus ***APPDATA*** handelt
(2) das identifizierte Ausgangs-Datenobjekt
   (a) aufgrund von den in ***DS*** definierten Semantischen Verbindungen in Semantischem Kontext zu Ziel-Datenobjekten aus ***APPDATA*** steht, die in einem Ziel-Formular aus ***FORMS*** angezeigt werden können oder
   (b) in Semantischem Kontext zu sich selbst als Ziel-Datenobjekt steht, wobei es im Ziel-Formular auf andere Weise als im Ausgangs-Formular (beide Formulare aus ***FORMS***) dargestellt wird

Das gegenständliche Verfahren stellt alle potenziellen Ausgangsknoten als Multihyperlinks dar und ermöglicht für diese die MHL-Navigation. Grundlage dafür sind die hier beschriebene Datensemantik sowie die in unterschiedlichen Darstellungsarten definierbaren MHL-Formulare.

Das Verfahren erfüllt somit die Eigenschaft (1).

### (2) Vollständigkeit der Semantischen Pfade pro Ausgangsknoten

### Seien

- ***APP, APPDATA, DS, FORMS*** definiert wie unter (1)

Dann ist Vollständigkeit der Pfade gegeben, wenn gilt
- Hat ein potenzieller Ausgangsknoten aufgrund von den in ***DS*** definierten Semantischen Verbindungen einen Semantischen Kontext zu Ziel-Datenobjekten aus ***APPDATA*** und können diese auch in einem Ziel-Formular aus ***FORMS*** angezeigt vorhanden, dann besteht dafür auch ein Pfad
- Hat ein potenzieller Ausgangsknoten einen Semantischen Kontext zu sich selbst als Ziel-Datenobjekt, wobei er im Ziel-Formular aus ***FORMS*** auf andere Weise als im Ausgangs-Formular dargestellt wird, dann besteht dafür auch ein Pfad

Das gegenständliche Verfahren erzeugt zu jedem Ausgangsknoten (Ausgangs-Datenobjekt aus ***APPDATA***) alle Semantischen Pfade. Grundlage dafür sind die hier beschriebene Datensemantik, die definierbaren MHL-Formulare sowie die vorliegenden Anwendungsdaten aus ***APPDATA.*** Für die Konstruktion von Semantischen Kontexten sind die Konzepte der Participating Entities sowie der Set Entrances essenziell, da sie semantisch verschiedene Einstiegsarten in dieselbe Semantische Menge ermöglichen.

Das Verfahren erfüllt somit die Eigenschaft (2).

### (3) Maximale Navigationseffizienz

### Seien

- ***APP, APPDATA, DS, FORMS*** definiert wie unter (1)
- ***APPDIA*** der mit einem beliebigen Verfahren erstellte Navigations-Dialog von ***APP***
- ***Pa*** die Summe der in ***APPDIA*** angebotenen Pfade bzw. Navigationsmöglichkeiten
- ***Pw*** die Summe der in ***APPDIA*** angebotenen werthabenden Pfade. Als werthabend werden jene Pfade definiert, die von einem Ausgangsknoten (Ausgangs-Datenobjekt aus ***APPDATA***) zu einem Ziel-Formular aus ***FORMS*** führen, in welchem eine nichtleere Menge von Ziel-Datenobjekten aus ***APPDATA*** angezeigt wird, die aufgrund von ***DS*** und ***FORMS*** in Semantischem Kontext zum Ausgangs-Datenobjekt stehen.

Dann ist der Effizienzgrad ***EG*** für die in ***APPDIA*** angebotene Navigation definiert als Verhältnis ***Pw : Pa.***

Das gegenständliche Verfahren hat einen Effizienzgrad EG = 1 (also 100%) und erfüllt somit die Eigenschaft (3). Anmerkung: Das Verfahren kann auch im Modus der "Erweiterten MHL-Pathlist" durchgeführt werden, bei dem Semantische Pfade zu Ziel-MHL-Formularen mit einer leeren Menge von Ziel-Datenobjekten angeboten werden, um auf diese Art im Ziel-MHL-Formular Datenänderungen (z.B. Einfügen neuer Anwcndungsdaten) zu ermöglichen. In diesem Modus ist Eigenschaft (3) nicht erfüllt.

### (4) Maximaler Vernetzungsgrad des Dialoges

### Seien

- ***APP, APPDATA, DS, FORMS*** definiert wie unter (1)

Dann liegt ein maximaler Vernetzungsgrad vor, wenn zu allen potenziellen Ausgangsknoten alle aufgrund von ***DS*** und ***FORMS*** möglichen Semantischen Pfade angezeigt werden, die aufgrund von ***APPDATA*** werthabend sind. Ein maximaler Vernetzungsgrad liegt also vor, wenn die Eigenschaften (1), (2) und (3) zutreffen.

Das gegenständliche Verfahren erfüllt die Eigenschaften (1), (2) und (3) und somit auch die Eigenschaft (4).

### Erweiterte Datensemantik

Zum Scope des Verfahrens gehört die Erweiterungen der beschriebenen Datensemantik unter Beibehaltung der wesentlichen Eigenschaften. Insbesondere betrifft dies die Erweiterung um folgende Syntax-Elemente:

### Entitätsartige Mengen:

- Entitäts-Subtyp (Bsp.: "Frau", "Mann" sind Subtypen der Entität "Mensch")
- Generische Entität: Zusammenfassung von unterschiedlichen Entitäten mit eigenen Schlüsselmengen auf einer einzigen relationalen Tabelle, wobei ein zusammengesetzter Schlüssel gebildet werden muss
- Entitäts-Teil: Gruppe von Attributen einer Entität, die mit einem Namen bezeichnet werden kann (Bsp.: der Entitäts-Teil "Wohnadresse von Mensch" umfasst einen Teil der Attribute der Entität "Mensch", nämlich "Strasse", "Postleitzahl", "Land", etc.)

### Semantische Verbindungen zwischen Entitätsartigen Mengen:

- Standard-Relation zwischen beliebigen Entitätsartigen Mengen
- Mehr als eine Relation zwischen zwei beliebigen Entitätsartigen Mengen
- Spezial-Relation zwischen beliebigen Entitätsartigen Mengen
- Relation zwischen 3 oder mehr beliebigen Entitätsartigen Mengen
- <Entität A> <ist enthalten in> <Generischer Entität B>: Beschreibt, welche Entitäten zu einer Generischen Entität gehören
- <Entitäts-Subtyp A> <ist-Subtyp-von> <Entität B>: Beschreibt, zu welcher Entität ein Subtyp gehört
- <Entitäts-Teil A> <ist-Attributgruppe-von> <Entität B>: Beschreibt, zu welcher Entität eine Attributgruppe gehört
- Relations-Subtyp, Generische Relation, Relations-Teil: analog zu Entitäts-Subtyp, Generische Entität, Entitäts-Teil

### Erweiterung auf mehrere MHL-Anwendungen

Zum Scope des Verfahrens gehört die Ausdehnung der Funktionalität auf mehrere im Netz verteilte, aber hinsichtlich der Navigation zusammenspielende Multihyperlink-Anwendungen.

## Patentansprüche

1. System zur Erzeugung eines Navigations-Dialogs mit maximalem Vernetzungsgrad für relational-multimediale Datenbank-Anwendungen,
wobei als maximaler Vernetzungsgrad des Navigations-Dialogs die Eigenschaft definiert wird, zu allen potentiellen Ausgangsknoten für die Navigation alle möglichen semantischen Pfade, anzuzeigen, die aufgrund der zur Beschreibung der Datenbank-Anwendung verwendeten Datensemantik und der zur Anzeige der Datenbank-Anwendung definierten Formulare möglich sind und die aufgrund der vernetzten Anwendungsdaten werthabend sind,
bestehend aus:
- einer relationalen Metadatenbank zur Speicherung von Metadaten über
- semantische Modelle von Anwendungen,
- die Speicherung von Anwendungsdaten,
- die Darstellung von Anwendungs- und Metadaten, die über ein Kommunikationsnetz transportiert werden,
- die Darstellung von Anwendungsdaten im Dialog-Client,
- die Multihyperlink-Navigation unter Verwendung einer Pfad-Liste,
- diversen Dateien und relationalen Tabellen für
- die Speicherung von relationalen Anwendungsdaten,
- die Speicherung von multimedialen Anwendungsdaten,
- die Speicherung von Counterdaten zur Ermittlung von werthabenden semantischen Pfaden für Anwendungsdatenobjekte
- einem Dialog-Server, der Mittel beinhaltet zur
- Entgegennahme von Anforderungen des Dialog-Client über ein Kommunikations-Netz,
- Weiterleitung von Requests an einen anderen, im Kommunikations-Netz vorhandenen Dialog-Server,
- Ermitteln der benötigten Metadaten aus der Meta-Datenbank,
- Ermitteln der Anwendungsdaten aufgrund der ermittelten Metadaten,
- Erzeugung eines XML-Dokuments mit Meta- und Anwendungsdaten
- Übersendung von Anwendungs- und Metadaten in einem XML-Dokument an den Dialog-Client.
- einem Dialog-Client zur Erzeugung eines Navigations-Dialogs, der Dialog-Client beinhaltet Mittel zur
- Übersendung von Anforderungen an den Dialog-Server über ein Kommunikations-Netz,
- Entgegennahme von Anwendungs- und Metadaten in einem XML-Dokument vom Dialog-Server über ein Kommunikations-Netz,
- Darstellung von Anwendungs- und Metadaten in Multihyperlink-Formularen,
wobei Anwendungsdaten als Multihyperlinks angezeigt werden,
- Darstellung der zum jeweiligen Multihyperlink zugehörigen Pfadliste nach Auswahl des Multihyperlinks durch den Benutzer,
- Erzeugung und Übersendung einer neuen Anforderung an den Dialog-Server als Reaktion auf einen durch den Benutzer ausgewählten semantischen Pfad im Multihyperlinkformular.

2. System gemäß Anspruch 1, weiterhin bestehend aus Mitteln
- des Dialog-Clients zur
- Darstellung eines Inhaltsverzeichnisses über die anzeigbaren Multihyperlink-Formulare oder auswählbaren Kapitel und zur
- Personalisierung des Inhaltsverzeichnisses und der Anzeige der semantischen Pfade zu den Semantischen Mengen,
- der relationalen Metadatenbank zur Speicherung von
- Metadaten zur Bereitstellung von Inhaltsverzeichnissen,
- Metadaten zur Bereitstellung von Suchformularen,
- Metadaten zu Datenänderungsformularen und
- Metadaten zur Personalisierung der Pfad-Liste und des Inhaltsverzeichnisses,
- des Dialog-Servers zur Übersendung von
- Metadaten zur Bereitstellung von Inhaltsverzeichnisse.
- Metadaten zur Bereitstellung von Suchformularen,
- Metadaten zur Bereitstellung von Datenänderungsformularen und
- Metadaten zur Personalisierung der Pfad-Uste und des Inhaltsverzeichnisses.

3. Verfahren zur Navigation in Multihyperlink-Formularen, bei weichem in Reaktion auf die Eingaben eines Benutzers von einem Multihyperlink-Formular zum nächsten Multihyperlink-Formular vorangeschritten wird, bestehend aus den folgenden Schritten:
- des Dialog-Clients:
A) Anzeige eines ersten Multihyperlink-Formulars mit eingebetteten Multihyperlinks.
B) Registrierung eines Right-Click-Events auf einem Multihyperlink,
C) Anzeige einer Liste mit Semantischen Pfaden mit Bezug auf diesen Multihyperlink
D) Registrierung eines Click-Events auf einen Semantischen Pfad
E) Senden einer Nachricht an einen Dialog-Server, mit welcher Anwendungs- und Metadaten für das nächste Multihyperlink-Formular, die eingebetteten Multihyperlinks und die anzeigbaren Semantische Pfade angefordert werden
des Dialog-Serven:
F) Empfang der Nachricht mit welcher Anwendungs- und Metadaten für das nächste Multihyperlink-Formular, die eingebetteten Multihyperlinks und deren Semantische Pfade angefordert werden,
G) Ermittlung von Anwendungs- und Metadaten für das nächste Multihyperlink-Formular sowie die eingebetteten Multihyperlinks und deren Semantische Pfade
H) Senden der in ein XML-Dokument eingebundenen Anwendungs- und Metadaten an den Dialog-Client
des Dialog-Clients:
I) Empfang der Anwendungs- und Metadaten für das nächste Multihyperlink- Formular, die eingebetteten Multihyperlinks und deren semantische Pfade
J) Anzeige des neuen Multihyperlink-Formulars

4. Verfahren gemäß Anspruch 3, weiterhin enthaltend die Schritte:
K) am Dialog-Client. Anzeige von mindestens einem Multihyperlink im neuen Multihyperlink-Formular
L) Wiederholen der Schritte B) bis J) in Reaktion auf die Eingaben des Benutzers

## Claims

1. System for creation of a navigational dialog with maximum crosslinking rate for relational-multimedia database applications, whereupon maximum crosslinking rate is defined as the property of displaying for every potential navigation source node all possible semantic paths with non-zero value based on the existing semantically connected application data, and semantic paths derivable from the semantic data description and the defined forms, consisting of:
- a relational metadatabase for storage of metadata on
o semantic models of applications,
o storage of application data,
o representation of application data and metadata when transported over a communication network,
o presentation of application data via the dialog client,
o the multihyperlink-navigation using a pathlist,
- miscellaneous files and relational tables for
o storage of relational application data,
o storage of multimedia application data,
o storage of counterdata for determining the semantic paths with non-zero value for application data objects,
- a dialog server comprising means for
o receiving requests from the dialog client over a communication network,
o forwarding requests to another dialog server being available in a communication network,
o determining the required metadata from the metadatabase,
o determining the application data based on the determined metadata,
o creating an XML document with metadata and application data,
o transmitting application data and metadata in an XML document to the dialog client,
- a dialog client for creation of a navigational dialog, comprising means for
o transmitting requests to the dialog server over a communication network,
o receiving application data and metadata in an XML document from the dialog server over a communication network,
o presenting application data and metadata in multihyperlink-forms, thereby displaying application data objects as multihyperlinks,
o presenting the dedicated pathlist for a multihyperlink after its selection by the user,
o creating and transmitting a new request to the dialog server as reaction to the selection of a semantic path in the multihyperlink-form by the user.

2. System according to claim 1, furthermore comprising means of
- the dialog client for
o presenting the table of contents containing the presentable multihyperlink-forms or selectable chapters and for
o personalising the table of contents and the display of semantic paths for semantic sets,
- the relational metadatabase for storage of
o metadata for providing the table of contents,
o metadata for providing search forms,
o metadata for providing data update forms and
o metadata for personalisation of the pathlist and the table of contents,
- the dialog-server for transmitting
o metadata for providing the table of contents,
o metadata for providing search forms,
o metadata for providing data update forms and
o metadata for personalisation of the pathlist and of the table of contents.

3. Method for navigation within a multihyperlink-form, proceeding from one multihyperlink-form to the next multihyperlink-form in reaction to user input, comprising the following steps
- of the dialog-client:
a) presenting a first multihyperlink-form with embedded multihyperlinks,
b) registering a right-click event on a multihyperlink,
c) presenting a list of semantic paths referring to this multihyperlink,
d) registering a click event upon a semantic path,
e) transmitting a message to a dialog server, thereby requesting application data and metadata for the next multihyperlink-form and its embedded multihyperlinks and their displayable semantic paths
- of the dialog server:
f) receiving the message which requests application data and metadata for the next multihyperlink-form and its embedded multihyperlinks and their displayable semantic paths,
g) determining application data and metadata for the next multihyperlink-form and its embedded multihyperlinks and their displayable semantic paths,
h) transmitting the XML document with embedded application data and metadata to the dialog client
- of the dialog client:
i) receiving application data and metadata for the next multihyperlink-form and its embedded multihyperlinks and their displayable semantic paths,
j) presenting the new multihyperlink-form

4. Method according to claim 3, furthermore comprising the steps:
k) of the dialog client: presenting at least one multihyperlink in a new multihyperlink-form
l) repeating steps b) to j) in reaction to user input as specified.

## Revendications

1. Système pour la création d'un dialogue de navigation avec un degré maximal d'interconnexion pour une application de base de donnée relationale et multimédiale,
où est défini comme degré maximal d'interconnexion du dialogue de navigation la propriété, d'afficher tous les chemins sémantiques possibles pour tous les noeds potentiels de départ de la navigation, en raison des formulaires définis pour la description de la sémantique et de l'affichage de la base de donnée pour l'application ayant des valeurs en raison des données interconnectées de l'application,
comprenant
• Une méta base de données relationale pour l'enrégistrement de méta-données sur:
o modèle sémantique d'applications,
o la sauvegarde de données d'applications,
o la présentation de données d'applications et de méta-données, qul sont transportées sur un réseau de communication,
o la présentation de données d'applications dans le client réseau,
o navigation par multi-lien hyper textes en utilisant une liste de chemins,
• fichiers divers et tables relationales pour
o la sauvegarde de données d'applications relationales,
o la sauvegarde de données d'applications multimédiales,
o la sauvegarde de données compteur pour la recherche de chemins sémantiques ayant des valeurs pour objets de données d'applications,
• un serveur réseau, comprenant des moyens pour
o Réception de demandes d'un client réseau par un réseau de communication,
o transfert de demandes à un autre serveur réseau présent dans le réseau de communication,
o Rechercher les méta-données nécessaires à la méta-base de données,
o Rechercher les données d'applications en raison des méta-données recherchées,
o Création d'un document XML comprenant des méta-données et des données d'applications,
o Envoi de méta-données et de données d'applications dans un document XML à un client réseau,
• un client réseau pour la création d'un dialogue de navigation, le clinet réseau comprend les moyens pour
o les demandes d'envol à un serveur réseau par un réseau de communication,
o Réception de données d'applications et de méta-données dans un document XML du serveur réseau par un réseau de communications,
o Présentaion de données d'applications et de méta-données dans des formulaires multi-lien hyper texte, où les données d'applications sont présentées comme des multi-lien hyper textes,
o Présentation d'une liste de chemins appartenant à un multi-lien hyper texte respectif après la sélection de multi-lien hyper texte par l'utilisateur,
o Création et envoi d'une application nouvelle au serveur réseau en réaction à un chemin sémantique coisi par l'utilisateur dans le formulaire multi-lien hyper texte.

2. Système selon revendication 1, toujours comprenant les moyens
o d'un client réseau à la
- Présentation d'une table des matières sur les formulaires multi-lien hyper texte présentables ou des chapitres choisissables et sur la
- Personalisation des table des matières et de l'affichage de la sémantique d'un chemin vers les ensembles sémantiques,
o d'une base de donnée relationale pour la sauvegarde de
- Méta-données sur la mise à disposition de table des matières,
- Méta-données sur la mise à disposition de formulaires de recherche,
- Méta-données pour les formulaires de modification de données et
- Méta-données pour la personalisation de la liste de chemins et des tables de matières
o du serveur dialogue pour la transmission de
- Méta-données sur la mise à disposition de tables des matières,
- Méta-données sur la mise à disposition de formulaires de recherche,
- Méta-données sur des formulaires de modification de données et
- Méta-données pour la personalisation d'une liste de chemins et de la table des matières.

3. Procédé pour la navigation dans des formulaires multi-lien hyper texte, chez lequel on procède, en réaction aux entrées d'un utilisateur d'un formulaire multi-lien hyper texte, au prochain formulaire multi-lien hyper texte, comprenant les pas suivants:
du client réseaux:
a) Affichage d' un premier fomulaire multi-lien hyper texte avec multi-lien hyper textes incorporés,
b) Enrégistrement d'un événement clic droit sur un multi-lien hyper texte,
c) Affichage d' une liste de chemins sémantiques en relation avec ce multi-lien hyper texte,
d) Enrégistrement d'un événement clic sur un chemin sémantique,
e) Envoi d'un message à un serveur réseau, par lequel est demandé des données d'applications et des méta-données pour le prochain formulaire multi-lien hyper texte, des multi-lien hyper textes incorporés et des chemins sémantiques affichables,
d'un serveur réseau:
f) Réception d'un message, avec lequel on peut demander des données d'applications et des méta-données pour le prochain formulaire multi-lien hyper texte, les multi-lien hyper textes incorporés et leurs chemins sémantiques.
g) Recherche de données d'applications et de méta-données pour le prochain formulaire multi-lien hyper texte et les multi-lien hyper textes incorporés et leurs chemins sémantiques,
h) Envoi de données d'applications et de méta-données, incorporées dans un document XML au client réseau.
d'un client réseau:
i) Réception de données d'applications et de méta-données pour le prochain formulaire multi-lien hyper texte, les multi-lien hyper textes incorporés et leurs chemins sémantiques,
j) Affichage d'un nouveau formulaire multi-lien hyper texte.

4. Procédé selon revendication 3, comprenant toujours les pas:
o Pour le client réseau: Affichage d'un multi-lien hyper texte au minimum dans le nouveau formulaire multl-lien hyper texte.
o Répétition des pas b) à j) en réaction aux entrées de l'utilisateur.
